# EUROPEAN PATENT SPECIFICATION

(11) **EP 3 995 057 B1**
(45) Date of publication and mention of the grant of the patent: **02.08.2023**
(21) Application number: 21204828.4
(22) Date of filing: 26.10.2021
(51) Int. Cl.: A47J 43/07, A47J 43/042

(54) **BLENDER**
MIXER
MÉLANGEUR

(30) Priority: 26.10.2020 KR 20200139133
(43) Date of publication of application: 11.05.2022
(73) Proprietor: LG Electronics Inc., SEOUL 07336 (KR)
(72) Inventor: KIM, Namhun, 08592 Seoul (KR); HWANGBO, Kyungsoo, 08592 Seoul (KR)
(74) Representative: Ter Meer Steinmeister & Partner

(56) References cited:
- US-A- 5 347 205
- US-A1- 2002 141 286
- US-A1- 2005 152 215
- US-B1- 6 397 735

## Description

### BACKGROUND

### 1. Technical Field

The present disclosure relates to a blender and one particular implementation relates to a blender capable of adjusting an operation time period of a motor based on a number of inputs of simple touch manipulation, thereby significantly improving user convenience.

### 2. Description of Related Art

A blender is a home appliance to cut food contained in a container into small pieces, pulverize the food to become a powder, or make the food to be in a liquid state by a blade rotated by an electric motor and is also commonly referred to as a mixer.

A blender places a container on an upper surface of a main body including a motor and a blade inside the container is connected to a rotary shaft of the motor when the container is placed on the upper surface of the main body and is rotated by the motor.

The user may drive the motor by manipulating a manipulation button or a knob of the main body after putting the food into the container, and the blender may pulverize the food while rotating the blade based on the driving of the motor.

The blender has become larger in capacity with the large-sized container and the blender uses a motor rotating at a super-high speed to effectively pulverize various types of food.

In addition, the blender may be manipulated to pulverize the various types of food and may pulverize the various types of food by simple manipulation.

US Patent No. 10,327,594 discloses a blender including a push-button on a front surface of a base to place a container for receiving selection manipulation input by a user.

The push-button may include a power button, a menu selection button, and a pulse mode selection button.

The power button receives a user manipulation to turn on/off the blender and the menu selection button receives the user manipulation when selecting an operation mode of the blender.

The pulse mode selection button receives a user manipulation for pulse mode operation for operating the motor at a high RPM for a time period desired by the user. In detail, the motor is continuously operated at a predetermined RPM while the user presses the pulse mode selection button by hand and the motor is immediately stopped when the user removes the hand from the pulse mode selection button.

The push-button such as the power button, the menu selection button, and the pulse mode selection button each protrude from the front surface of the blender by a predetermined distance and are pushed rearward from the front surface of the blender by the push manipulation of the user.

Therefore, according to the related art document, the protruding push-button may be pressed unintentionally, particularly when being pressed by a strong instantaneous force, the push-button or inner components of the base may be damaged and an unintended operation might be caused.

In addition, a gap is inevitably defined between the push-button and the front surface of the blender in the structure of the push-button and there is a high possibility of introduction of the food or the liquid through the gap, which might overflow from the container during the operation of the blender. Foreign substances such as the food or liquid introduced through the gap directly may damage the electric components of the blender such as a PCB, thereby causing malfunction or irreversible failure.

A further prior art blender is disclosed in US-A-2005/152215.

### SUMMARY OF THE DISCLOSURE

The present disclosure has been devised to address the problems of the related art.

A first object of the present disclosure is to provide a blender being robust against food or fluid being spoiled.

A further object of the present disclosure is to provide a blender being operable more easily and/or avoiding any unintentional operation.

The blender includes an outer case made of metal and a touch input portion integrated with the outer case and to receive power on-off manipulation and pulse mode selection manipulation, but may not include a physical push button type input means as in the related art and/or may not define a gap between the push button and the outer case, thereby effectively preventing component damage by an external force and damage and failure caused by introduction of food and improving product reliability.

In addition, a second object of the present disclosure is to provide a blender having a motor being operable for a time period desired by the user based on a simple touch input to the touch input portion that is integrated with the outer case and drive the blender in a pulse mode, thereby improving user convenience.

Aspects of the present disclosure are not limited to the above-mentioned aspects. In addition, other aspects of the present disclosure not mentioned may be clearly understood by the following description, and may be clearly understood by the examples of the present disclosure. Further, it will be understood that the aspects of the present disclosure may be realized by features described in claims and a combination thereof.

The object is solved by the features of the independent claims. Preferred embodiments are given in the dependent claims.

According to the present disclosure, the blender includes a jar including a blade module configured to pulverize food; a main body to place the jar and including a motor configured to rotate the blade module; and a controller disposed inside the main body and configured to operate the motor; the main body includes an outer case made of metal and defining an outer appearance of the main body, the outer case includes a touch input portion on an outer upper surface thereof, a touch sensor is disposed on an inner surface of the outer case at a position corresponding to the position of the touch input portion and is configured to detect touch manipulation input to the touch input portion.

Thus, the main body is protected from entering of any fluid at the upper side, as the touch input portion fully seals the upper surface. Thus, no gap is formed at the upper surface allowing any fluid to enter in the inside of the main body.

With respect to the object to facilitate the operation, the blender includes a jar including a blade module configured to pulverize food; a main body to place the jar and including a motor configured to rotate the blade module; and a controller disposed inside the main body and configured to operate the motor; the main body includes an outer case made of metal and defining an outer appearance of the main body, the outer case includes a touch input portion on an outer upper surface thereof, a touch sensor is disposed on an inner surface of the outer case at a position corresponding to the position of the touch input portion and is configured to detect touch manipulation input to the touch input portion. The controller is configured to determine an operation time period of the motor based on a number of inputs of the touch manipulation detected by the touch sensor.

According to the present disclosure, the blender fundamentally prevents a gap between the input portion and the case, thereby effectively preventing the damage and the failure caused by introduction of the food.

According to the present disclosure, the blender may be easily operated in the pulse mode by operating the motor for a time period desired by the user based on a number of simple touch inputs, thereby significantly improving user convenience.

In one or more embodiments, the controller may be configured to determine whether the operation time period is elapsed after the motor is operated.

Based on the determination that the operation time period is elapsed, the controller may be configured to cut off a power supplied to the motor and stop the motor.

The controller may be configured to set the operation time period and a target RPM level of the motor before the motor is operated and the operation time period includes a first time period for which a current rotation number of the motor is increased to a predetermined target RPM level and a second time period for which a current rotation speed of the motor is maintained at the target RPM level after reaching the target RPM level.

The first time period may be shorter than the second time period.

The target RPM level may be a maximum RPM level that may be output by the motor.

The first time period may be 1 second and the second time period may be 2 seconds.

The controller may be configured to determine whether the touch manipulation is re-input to the touch input portion using the touch sensor when the operation time period is not elapsed.

The controller may be configured to: based on the determination that the touch manipulation is re-input to the touch input portion, update a number of accumulated re-inputs by adding the number of accumulated touch manipulation inputs to the touch input portion by a re-input number after the motor is operated and determine whether the number of accumulated touch manipulation inputs exceeds a predetermined set number.

The controller may be configured to: based on the determination that the number of accumulated touch manipulation inputs is less than the predetermined set number, reset the operation time period by extending the operation time period by a time period obtained by multiplying a third time period by the re-input number.

The third time period may be shorter than a sum of the first time period and the second time period.

The third time period may be the same as the second time period.

The controller may be configured to: based on the determination that the number of accumulated touch manipulation inputs is larger than or equal to the predetermined set number, not to reset the operation time period.

The blender may further include a knob that passes through an outer surface of the outer case and configured to receive rotation manipulation to switch an operation mode of the motor.

The blender may further include a knob sensing sensor configured to detect an amount of rotation of the knob based on the rotation manipulation.

The controller may be configured to determine whether manipulation of rotating the knob is input from the knob sensing sensor before operating the motor based on the determination that the touch manipulation is input to the touch input portion.

The controller may be configured to: based on the determination that the manipulation of rotating the knob is input, determine a cooking mode selected based on information on the amount of rotation of knob received from the knob sensing sensor.

The controller may be configured to: based on the determination that the cooking mode selected based on the amount of rotation of the knob is a cooking end mode or an automatic cooking mode, set a maximum RPM level that may be output by the motor to be the target RPM level.

The controller may be configured to: based on the determination that the cooking mode selected based on the amount of rotation of the knob is a manual cooking mode, determine an RPM level selected based on the amount of rotation of the knob received from the knob sensing sensor after the manual cooking mode is selected.

The controller may be configured to set the selected RPM level to be the target RPM level.

The touch input portion may be integrated with the outer case.

According to the present disclosure, the blender may include an outer case made of metal and a touch input portion integrated with the outer case.

The blender may receive a power on-off manipulation and pulse mode selection manipulation, but may not include a physical push button type input means as in the related art.

The blender may have an outer case having no gap between the push button and the outer case, thereby effectively preventing component damage by an external force and damage and failure caused by introduction of food and improving product reliability.

In addition, according to the present disclosure, the blender may operate a motor for a time period desired by the user based on a simple touch input to the touch input portion that is integrated with the outer case and is operated in the pulse mode, thereby improving user convenience.

In addition to the above-described effects, further effects of the present disclosure are described together while explaining specific matters to carry out the disclosure below.

### BRIEF DESCRIPTION OF THE DRAWINGS

FIG. 1 is a front view of an example blender.
FIG. 2 is a perspective view of the blender in FIG. 1.
FIG. 3 is a longitudinal cross-sectional view of the blender in FIG. 1.
FIG. 4 is a perspective view of a main body in FIG. 1.
FIG. 5 is a cross-sectional view of the main body taken along line V-V' in FIG. 4.
FIG. 6 is an exploded perspective view of the main body in FIG. 4 when viewed from top.
FIG. 7 is an exploded perspective view of the main body in FIG. 4 when viewed from bottom.
FIG. 8 is an exploded perspective view of components defining an outer appearance of the main body in FIG. 4.
FIG. 9 is an exploded perspective view of a touch module and a display module coupled to an inner case in FIG. 8.
FIG. 10 is a perspective view of the inner case in FIG. 9 when viewed from bottom.
FIG. 11 is a bottom view of an inside of a main body when a touch module and a display module are coupled to the main body.
FIG. 12 is a cross-sectional view taken along line XIII-XIII' of FIG. 2.
FIG. 13 is an exploded perspective view showing arrangement relation between the inner case and a PCB module in FIG. 8.
FIG. 14 is an exploded perspective view of a knob in FIG. 13 when viewed from the front in one direction.
FIG. 15 is a functional block diagram of example components of a controller of a blender.
FIG. 16 is a graph showing touch sensing by a touch sensor in FIG. 15.
FIGS. 17 and 18 are graphs showing an example operation of a blender in a pulse mode.
FIGS. 19 and 20 are flowcharts of a method for controlling a blender according to a first embodiment of the present disclosure.
FIGS. 21 to 23 are flowcharts of a method for controlling a blender according to a second embodiment of the present disclosure.

### DETAILED DESCRIPTION OF EXEMPLARY IMPLEMENTATIONS

Some embodiments of the present disclosure are described in detail with reference to accompanying drawings. Therefore, a person having ordinary knowledge in the art to which the present disclosure pertains is able to easily embody the technical idea of the present disclosure. A detailed description of a well-known technology relating to the present disclosure may be omitted if it unnecessarily obscures the gist of the present disclosure. Hereinafter, one or embodiments of the present disclosure are described in detail with reference to the accompanying drawings. Same reference numerals may be used to refer to same or similar components.

Terms such as first, second, and the like may be used herein to describe elements of the present disclosure. These elements are not limited by these terms. These terms are intended to distinguish one element from another element. A first element may be a second element unless otherwise stated.

Unless otherwise stated, each component may be singular or plural throughout the disclosure.

In this document, the terms "upper," "lower," "on," "under," or the like are used such that, where a first component is arranged at "an upper portion" or "a lower portion" of a second component, the first component may be arranged in contact with the upper surface or the lower surface) of the second component, or another component may be disposed between the first component and the second component. Similarly, where a first component is arranged on or under a second component, the first component may be arranged directly on or under (in contact with) the second component, or one or more other components may be disposed between the first component and the second component.

Further, the terms "connected," "coupled," or the like are used such that, where a first component is connected or coupled to a second component, the first component may be directly connected or able to be connected to the second component, or one or more additional components may be disposed between the first and second components, or the first and second components may be connected or coupled through one or more additional components.

In some examples, singular expressions used in the present disclosure include plural expressions unless the context clearly indicates otherwise. In the present disclosure, terms such as "including" or "comprising" should not be construed as necessarily including all of the various components, or various steps described in the present disclosure, and terms such as "including" or "comprising" should be construed as not including some elements or some steps or further including additional elements or steps.

In the present disclosure, unless otherwise stated, "A and/or B" means A, B or A and B. Unless otherwise stated, "C to D" means "C or more and D or less".

Hereinafter, a blender and a method for controlling the blender according to some embodiments of the present disclosure are described.

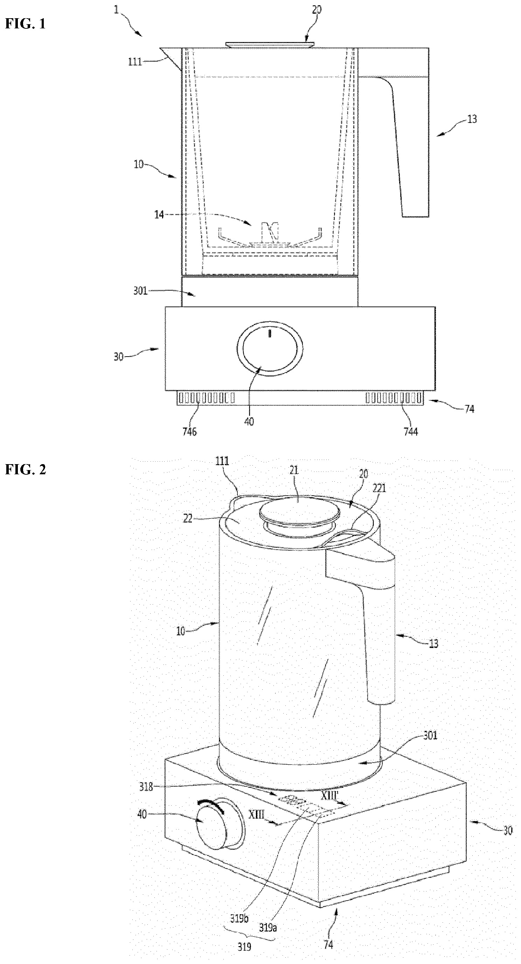

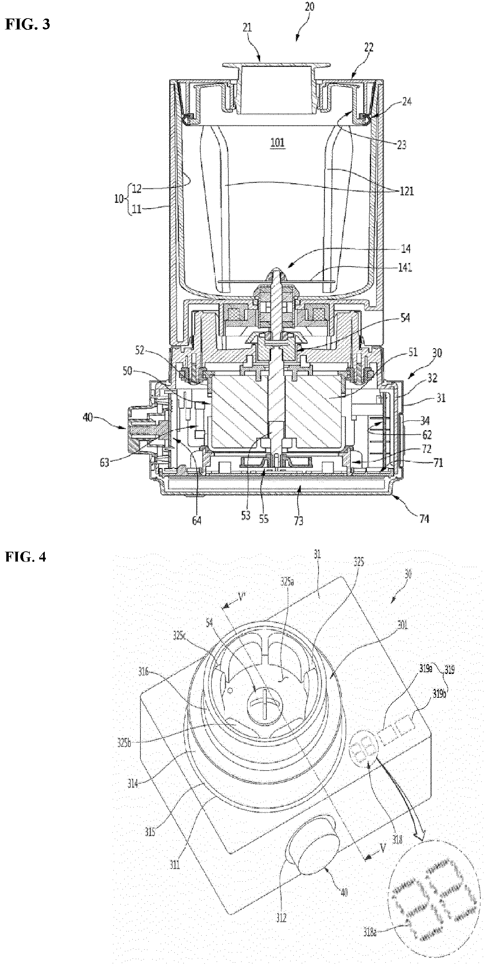

FIG. 1 is a front view of an example blender. FIG. 2 is a perspective view of the blender in FIG. 1. FIG. 3 is a longitudinal cross-sectional view of the blender in FIG. 1.

Components of the blender according to the present disclosure are described with reference to FIGS. 1 to 3.

As shown, a blender 1 according to the present disclosure includes a main body 30 disposed on the floor and a jar 10 placed on the main body 30.

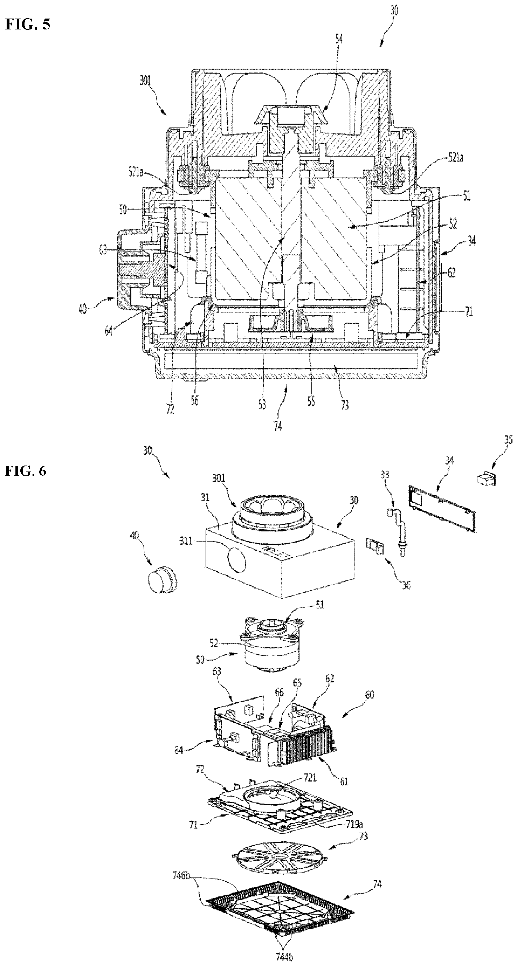

Hereinafter, a position at which a knob 40 is disposed is referred to as a front surface or a front and a portion to which a power connector 35 (see FIG. 6) is connected is referred to as a rear surface or a rear. In addition, a position of a lower surface of the main body 30 is referred to as a lower surface or a lower side, a left side of the knob 40 is referred to as a left surface or a left side, and a right side of the knob 40 is referred to as a right surface or a right side.

Electrical devices and components such as a motor assembly 50 and a printed circuit board (PCB) module 60 are disposed in the main body 30 to operate the blender 1.

In addition, a knob 40 and a touch input portion 319 may be provided as a manipulator to manipulate the operation of the blender 1, and a display 318 may indicate an operation state thereof.

The main body 30 may have a hexahedral shape and includes a seating portion 301 on an upper surface thereof to place the jar 10. The jar 10 is detachably coupled to the seating portion 301 of the main body 30 in a vertical direction.

An outer case 31 defines an appearance of the main body 30. The outer case 31 is made of metal or has a metal texture.

The outer case 31 may have a hexahedral shape with a lower surface defining an opening. An inner case 32 is disposed inside the outer case 31 and provides an installation space to accommodate the motor assembly 50 and the PCB module 60.

The knob 40 may be disposed on the front surface of the main body 30 to set an operation of the blender 1 by the user.

The knob 40 protrudes from the front surface of the main body 30 and may manipulate and set the operation of the blender 1 by rotation.

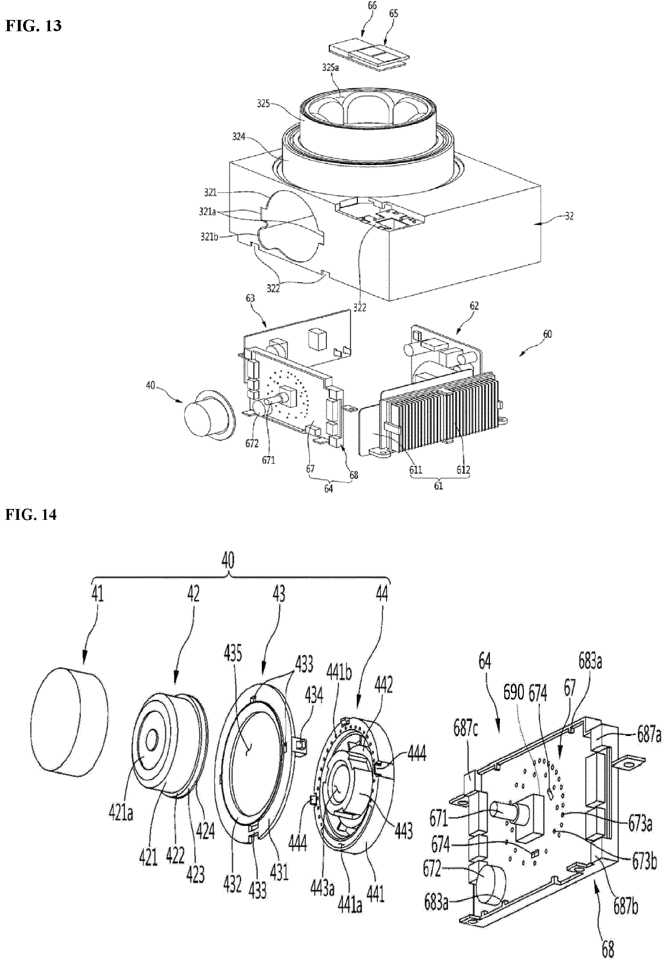

A configuration of the knob 40 is described below with reference to FIGS. 13 and 14.

A bottom cover 74 is disposed under the main body 30.

The bottom cover 74 may be detachably coupled to the outer case 31 and the inner case 32 and contact the floor on which of the blender is disposed.

In addition, the bottom cover 74 may space apart the outer case 31 and the inner case 32 from the floor and define a cover suction inlet 744 to suction cooling air to an inside of the main body 30 and a cover discharge outlet 746 to discharge cooling air to an outside of the main body 30.

The main body 30 may include a display 318 on the upper surface thereof to indicate an operation state of the blender 1.

For example, the display 318 may be configured as at least one or more, seven-segment display as shown.

The display 318 may have a combination of minute through-holes that extend inside the outer case 31.

The through-holes may be defined at positions corresponding to those of a plurality of light emitting diodes (LEDs) provided in a display module 66 described below, and a plurality of LEDs may be combined to form a letter or a number. The display 318 may display different letters or numbers depending on a lighting state of the LED.

In addition, the through-hole may be filled with a hole filling member. The hole filling member may be made of, for example, transparent resin such as silicone and acrylic and may be made of light-transmissive material to transmit the light from the LED. In addition, the hole filling member may prevent food or foreign substances generated in the cooking process using the blender 1 from being attached to the outer case 31 or being inserted into the through-hole.

The main body 30 may include a touch input portion 319 on the upper surface thereof to manipulate the operation of the blender 1. For example, the touch input portion 319 may include a pulse mode selector 319a and an on-off selector 319b.

The touch input portion 319 may be arranged side by side at a side of the display 318. That is, the touch input portion 319 may be arranged adjacent to the display 318 in order for the user to recognize the touch input portion 319 and the display 318 at once when the user wants to manipulate the touch input portion 319.

The touch input portion 319 is provided at a position corresponding that of he touch sensor 654 of the touch module 65 described below.

For example, the touch input portion 319 may be formed by printing on the outer case 31 or by surface-processing such as etching. In addition, the touch input portion 319 may be formed by attaching a film. The touch input portion 319 may induce the user to touch an accurate position that may be detected by the touch sensor 654, and may provide the user with the accurate touch position or induce the user to perform a manipulation operation.

The touch input portion 319 does not protrude from an outer surface of the main body 30 in related art, but is integrated with the outer case 31 in the present disclosure, thereby significantly reducing a possibility of damage thereof due to an external force. Also, in the present disclosure, as a gap of a button in the related art is not provided, thereby fundamentally blocking a possibility of introduction of the foreign substances such as the food through the touch input portion 319 of the present disclosure.

The seating portion 301 may be disposed on the upper surface of the main body 30. The seating portion 301 may protrude from the upper surface of the main body 30 and a portion of the seating portion 301 may be inserted into the lower surface of the jar 10 to stably support the jar 10. When the jar 10 is placed on the seating portion 301, the motor assembly 50 is coupled to the blade module 14 inside the jar 10 to transmit a rotational force to the blade module 14.

The seating portion 301 may be provided at a slightly eccentric side from a center of the main body 30.

An overall horizontal length including a handle 13 of the jar 10 corresponds to a horizontal length of the main body 30. A center of a food receiving space of the jar 10 may be eccentric from the center of the main body 30 and a center of the seating portion 301 may also be disposed on a same extension line as the center of the jar 10. In addition, the knob 40 may be provided at a position corresponding to the center line of the seating portion 301 and the jar 10 and may be disposed at an eccentric side of the front surface of the main body 30.

The seating portion 301 may be made of the same material as the outer case 31 and define an outer appearance. The seating portion 301 may be made of metal or material with a metal texture and have a sense of unity with the outer appearance of the main body.

The motor assembly 50 may be disposed inside the main body 30 under the seating portion 301. The motor assembly 50 rotates the blade module 14 inside the jar 10 and may be rotated at a high speed. In addition, as described below, in a manual cooking mode, the motor assembly 50 adjusts a rotation speed according to a revolutions per minute (RPM) level selected based on the rotation of the knob 40. Configuration thereof is described below.

An upper surface of the motor assembly 50 may be connected to the blade module 14 inside the jar 10. The motor assembly 50 may include a cooling fan 55 at a lower portion thereof and rotate together with the blade module 14 when the motor assembly 50 is driven to force flow of cooling air inside the main body 30.

A plurality of PCB modules 60 may be disposed on the inner wall of the inner case 32, which forms the inner surface of the main body 30. The plurality of PCB modules 60 may be provided and may be disposed at a circumference of the inner surface of the main body 30, that is, on a front surface, a rear surface, a left surface, and a right surface.

Further, the open lower surface of the inner case 32 is closed by the base plate 71. The base plate 71 may place an air guide 72 to guide discharge of cooling air suctioned by the cooling fan 55.

A predetermined space is defined between the base plate 71 and the bottom cover 74 and a wireless power module 73 may be disposed between the base plate 71 and the bottom cover 74. The wireless power module 73 may supply power to the motor assembly 50 in a wireless manner using an induced electromotive force.

The jar 10 may have a cylindrical shape with an outer diameter corresponding to that of the seating portion 301, define an opening at an upper side thereof, and provide a food receiving space 101.

The jar 10 may be made of material such as glass, tritan, and transparent plastic to identify a state of the food inside the jar 10 during the operation of the blender 1. In addition, the jar 10 may include an outer jar 11 having an outer shape and an inner jar 12 providing an inner space to receive the food.

The inner jar 12 and the outer jar 11 are coupled to each other to form the shape of the jar 10, and the jar 10 may have a double wall structure.

In addition, the outer jar 11 has a cylindrical shape with an outer diameter of an upper side thereof being the same as a lower side thereof and may define a neat appearance of the jar 10. In addition, the outer diameter of the outer jar 11 is the same as the seating portion 301 such that the main body 30 and the jar 10 have a sense of unity when the jar 10 is disposed on the seating portion 301.

A main body accommodator 102 is disposed on the lower surface of the outer jar 11.

The main body accommodator 102 is recessed from the lower surface of the outer jar 11 in an upward direction to receive a second seating portion 325 described below. The jar 10 may be placed on the seating portion 301 by coupling between the main body accommodator 102 and the second seating portion 325.

The blade module 14 is disposed at a center of an inner bottom surface of the jar 10. The blade module 14 includes a plurality of blades 141 and may be connected to the motor assembly 50. When the motor assembly 50 is driven in a state in which the jar 10 is placed on the main body 30, the blade 141 is rotated to pulverize or cut the food inside the jar 10.

In addition, the jar 10 may include a plurality of inner guides 121 to guide the rotating food. The inner guide 121 may extend from the bottom of the inner surface of the jar 10 in an upward direction by a predetermined length and may extend to a lower surface of a lid 20 when the lid 20 is placed.

A spout 111 protrudes from a first side of an upper end of the jar 10 to pour the pulverized food. A handle 13 may protrude from a second side of the jar 10 opposite to the first side at which the spout 111 is disposed.

The handle 13 protrudes outward from the upper end of the jar 10 and extends downward in order for the user to lift or move the jar 10. The protrusion of the handle 13 may be provided on a same extension line as a side surface of the main body 30.

In addition, the lid 20 is detachably coupled to the open upper surface of the jar 10 and may close the open upper surface of the jar 10. The user separates the lid 20 from the jar 10 while holding the lid handle 13 to open and close the open upper surface of the jar 10. For example, the lid 20 may include a lid upper portion 22, a lid lower portion 23, and a lid handle 221, and has a lid gasket 24 disposed along a circumference of the lid 20.

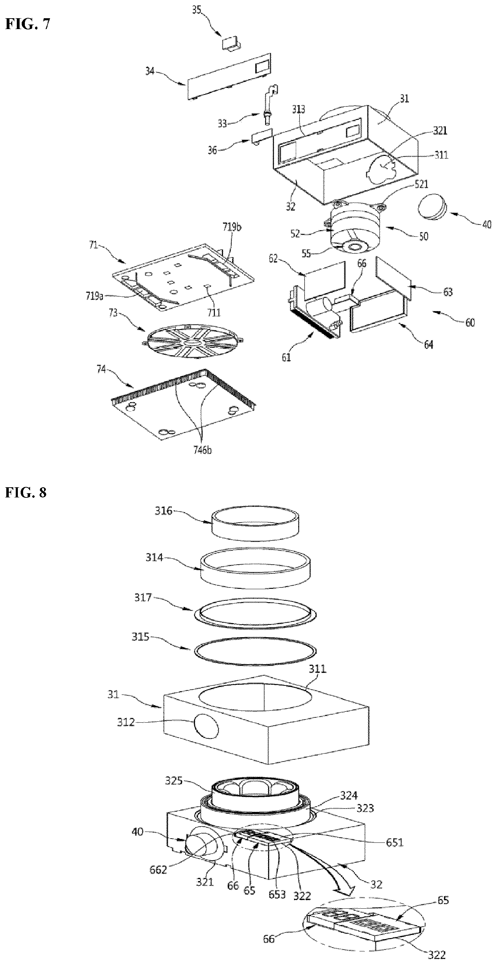

FIG. 4 is a perspective view of a main body in FIG. 1. FIG. 5 is a cross-sectional view taken along line V-V' in FIG. 4. FIG. 6 is an exploded perspective view of the main body in FIG. 4 when viewed from top. FIG. 7 is an exploded perspective view of the main body in FIG. 4 when viewed from bottom. FIG. 8 is an exploded perspective view of components defining an outer appearance of the main body in FIG. 4.

As shown in FIGS. 4 to 7, a main body 30 has a rectangular parallelepiped box shape, and a seating portion 301 is disposed on an upper surface of the main body 30 to place the jar 10, and a knob 40 is disposed on a front surface of the main body 30 to manipulate an operation of a blender 30.

In addition, the inner case 32 defines an inner and overall appearance of the main body 30, and an outer case 31 is disposed at an outside of the inner case 32 and defines an outer appearance of the main body 30.

The inner case 32 is injection molded with plastic to place inner components and outer components of the main body 30.

In addition, the outer case 31 may be made of metal such as stainless steel and may be formed by bending and joining plate-shaped material, thereby defining a near and robust appearance. The outer case 31 may have a hexahedral shape with an open lower surface and define an outer appearance of the main body 30, and the inner case 32 may be disposed in the outer case 31 and accommodate a plurality of components.

The outer case 31 and the inner case 32 have the open lower surface and accommodate a motor assembly 50 and a plurality of PCB modules 60. In addition, a base plate 71 closes the open lower surface of the inner case 32 and a bottom cover 74 forms a lower surface of the main body 30.

The structure of the main body 30 is described in detail. The outer case 31 may include a quadrilateral upper surface, a front surface, a rear surface, a left surface, and a right surface that extend downward along a circumference of the upper surface thereof.

The outer case 31 may define an opening 311 on the upper surface thereof. An outer diameter of the upper surface opening 311 may be the same as or slightly larger than that of the seating portion 301. Accordingly, when the inner case 32 and the outer case 31 are coupled to each other, an upper portion of the inner case 32 forming the seating portion 301 may be exposed to an outside of the outer case 31 through the upper surface opening 311.

A first seating portion decoration 314, a second seating portion decoration 316, a lower decoration 315, and a connecting decoration 317 may be disposed at an upper portion of the inner case 32 that protrudes outward from the outer case 31.

The first seating portion decoration 314, the second seating portion decoration 316, the lower decoration 315, and the connecting decoration 317 may define an outer appearance of the seating portion 301. The first seating portion decoration 314 and the second seating portion decoration 316 may be made of the same material as the outer case 31 or material with the same texture as the outer case 31 and have a sense of unity.

The first seating portion decoration 314 and the second seating portion decoration 316 each have a ring shape with a predetermined height. The first seating portion decoration 314 has a larger diameter than that of the second seating portion decoration 316, and the connecting decoration 317 may connect an upper surface of the first seating portion decoration 314 and the second seating portion decoration 316 and may have a ring shape.

In addition, the first seating portion decoration 314, the second seating portion decoration 316, and the connecting decoration 317 may be disposed on an outer surface of the first seating portion 324 and the second seating portion 325 of the inner case 32, and an upper surface of the first seating portion 324.

The second seating portion 325 extends from the upper surface of the first seating portion 324 in an upward direction and may provide an insertion space 325a to accommodate ajar coupler disposed in a blade module mounting portion 103.

2 Ajar coupling protrusion 325b and ajar coupling groove 325c are defined in an inner surface of the insertion space 325a and are coupled to the jar coupler that protrudes from the bottom surface of the jar 10. In addition, a plurality of jar coupling protrusions 325b and jar coupling grooves 325c may be continuously disposed along the inner surface of the second seating portion 325. When the jar 10 is placed on the seating portion 301, the jar coupler may be fixedly coupled at a fixed position by assembly to the jar coupling protrusion 325b and the jar coupling groove 325c.

In addition, the outer case 31 includes a knob hole 312 on a front surface thereof through which the knob 40 passes. The knob 40 may protrude forward from the main body 30 through the knob hole 312.

In addition, the outer case 31 defines a recessed plate groove 313 on a rear surface thereof to accommodate a rear plate 34.

In addition, a communication module 36 is disposed on an inner rear surface of the inner case 32.

In addition, a power connector 35 is inserted into the plate groove 313 to supply power to the main body 30 and passes through the rear plate 34.

The inner case 32 may have the box shape, define the opening at the lower surface thereof, and the seating portion 301 is disposed above the inner case 32.

The inner case 32 may have a flat upper surface, the front surface, the rear surface, the left surface, and the right surface that extend downward in a vertical direction along the circumference of the upper surface thereof.

The inner case 32 is made of plastic material, is molded to have a relatively complex shape, and accommodates the motor assembly 50 and the PCB module 60.

The inner case 32 may include a knob mounting hole 321 on a front surface thereof. The knob mounting hole 321 may be opened to receive the knob 40 placed on the main PCB module 64 and may be disposed at a rear side of the knob hole 311.

A mounting portion 322 is disposed on an upper surface of the inner case 32. The mounting portion 322 may be recessed to accommodate the display module 66 and the touch module 65. The mounting portion 322 defines a step, and the display module 66 and the touch module 65 are closed by the outer case 31 when the display module 66 and the touch module 65 are disposed on the mounting portion 322.

The motor assembly 50 is disposed in the inner space of the inner case 32. The motor assembly 50 generates a rotational force of the blade module 14 and may be disposed below the center of the seating portion 301.

The motor assembly 50 includes a motor 51 having a motor shaft 53 that extends vertically, motor housing 52 to accommodate the motor 51, a motor connector 54 disposed on an upper surface of the motor shaft 53, and a cooling fan 55 disposed on a lower surface of the motor shaft 53.

The motor connector 54 is disposed on the upper surface of the motor shaft 53 and is coupled to the blade module 14 when the jar 10 is placed on the seating portion 301. The motor connector 54 may be coupled to the blade module 14 to transmit the rotational force generated by the motor 51 to the blade module 14. The motor connector 54 may be exposed through the upper surface of the inner case 32 and may be disposed at a center of the insertion space 325a inside the seating portion 301.

The cooling fan 55 may be exposed to an outside of the motor housing 52 and may be accommodated inside an air guide 72 described below. Therefore, when the cooling fan 55 is operated, air that has passed through the motor housing 52 may be guided to an inside of the air guide 72.

In addition, air flow is generated inside the main body 30 based on the driving of the cooling fan 55, and in particular, at least some of the PCB modules 60 disposed at the outside of the motor housing 52 are provided in a path of air flow that is generated based on the driving of the cooling fan 55 and may be cooled together.

3 The inner case 32 accommodates a plurality of PCB modules 60 to operate the blender 1. The PCB modules 60 may be disposed on the inner surfaces of the inner case 32.

As shown in FIGS. 6 and 7, the PCB module 60 may include a plurality of PCB modules which have different functions and may be arranged side by side with the wall of the inner case 32 at a position adjacent to the inner surface of the inner case 32.

That is, the PCB module 60 may surround the motor assembly 50 at the outside of the motor assembly 50. When the motor assembly 50 rotates, the PCB modules 60 may be provided in the flow path of the air passing through the motor assembly 50 and the PCB module 60 may be air-cooled. In this case, the cooling air flow to a PCB having a high exothermic temperature among the PCB modules 60 is concentrated, thereby effectively dissipating heat or cooling air.

Specifically, the PCB module 60 may include a main PCB module 64, an inverter PCB module 61 to control the motor 51, a power PCB module 62 to control an input power, and a filtering PCB module 63 to remove noise.

An additional PCB module 60 may be further provided or some PCB modules 60 may be omitted according to a function of the blender 1. The present disclosure is not limited thereto, but as shown, a PCB module 60 including the main PCB module 64, the inverter PCB module 61, the power PCB module 62, and the filtering PCB module 63 is described below.

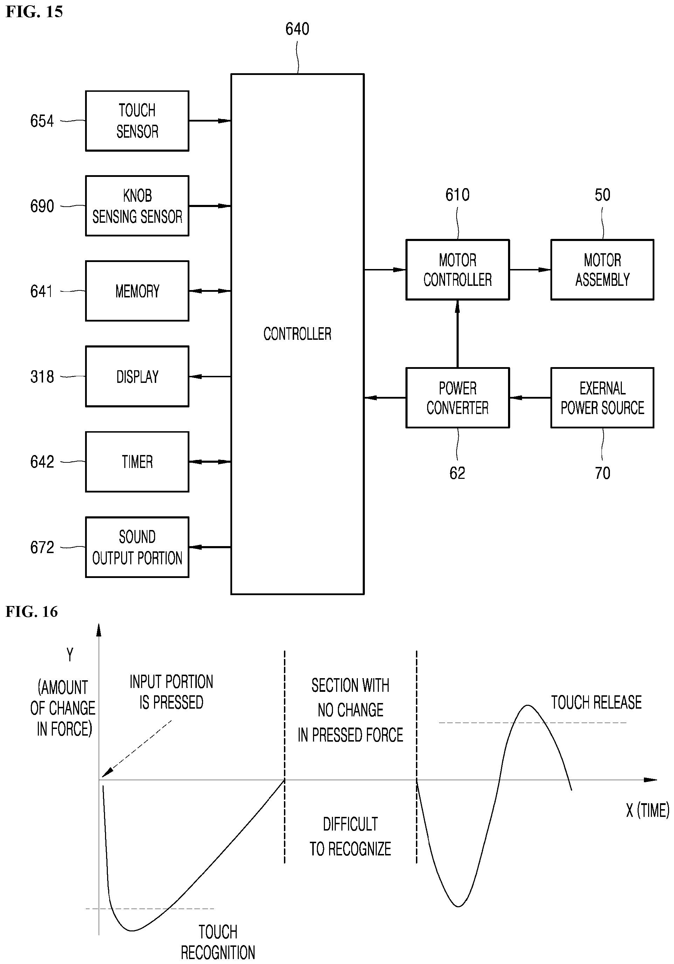

The main PCB module 64 includes a controller (see FIG. 15) to control the overall operation of the blender 1, in particular, places the knob 40 to receive a manipulation input to the knob 40.

The main PCB module 64 is disposed on the inner front surface of the inner case 32 corresponding to the position of the knob 40. As described below, the main PCB module 64 may be electrically connected to each of the display module 66 and the touch module 65.

The main PCB module 64 may transmit operation information of the blender 1 to the display module 66 and receive a touch signal input to the touch module 65 when the user manipulates the touch module 65.

The power PCB module 62 functions as a power converter to supply power to the inside of the blender 1 and may be disposed on an inner rear surface of the inner case 32 at which the power connector 35 is disposed.

The power PCB module 62 may be referred to as a switching mode power supply (SMPS). The power PCB module 62 changes a state of the power received from the power connector 35 to a stable state to drive the blender 1 and supplies the power in the stable state. In addition, the power PCB module 62 may receive power from the wireless power module 73 when the blender 1 is used wirelessly, and similarly, the power PCB module 62 changes the state of power to a stable state to drive the blender 1 and supplies the power in the stable state.

The inverter PCB module 61 functions as a motor controller to control a rotation speed or a number of rotations of the motor 51, and controls the rotation speed of the motor 51 to be variable according to user manipulation.

The inverter PCB module 61 may generate heat with a high temperature during operation according to an operation property thereof, and thus, may require intensive cooling. For the cooling, the inverter PCB module 61 includes a heat dissipation member 612 (see FIG. 13) on the inner surface of the inner case 32 corresponding to the position of the plate suction inlet 719a to achieve the intensive cooling.

The filtering PCB module 63 may be electrically connected to the power PCB module 62 and remove noise of a power frequency output from the power PCB module 62. In addition, the filtering PCB module 63 may be disposed on one side of the inner surface of the inner case 32 facing the inverter PCB 611.

The main PCB module 64 may face the power PCB module 62 and the inverter PCB module 61 may face the filtering PCB module 63. For example, four surfaces, that is, a front surface, a rear surface, a left surface, and a right surface of the PCB module 60 may surround the motor assembly 50 and the motor assembly 50 is disposed in the PCB module 60.

The base plate 71 may be disposed at a lower side of the inner case 32. The base plate 71 may close the open lower surface of the inner case 32 and support some of the components inside the inner case 32.

The base plate 71 may have the plate shape corresponding to a shape of the open lower surface of the inner case 32. In addition, the circumference of the base plate 71 may be coupled to the lower side of the inner case 32 to close the circumference of the base plate 71 and the lower side of the inner case 32.

In addition, the base plate 71 may define a plate suction inlet 719a and a plate discharge outlet 719b at both left and right sides thereof. The plate suction inlet 719a is defined along a first side of the base plate 71 and provides a path through which cooling air is introduced into the inner case 32 when the motor assembly 50 is driven. In addition, the plate discharge outlet 719b is defined along a second side of the base plate 71 and provides a path through which the cooling air inside the inner case 32 is discharged to the outside of the inner case 32.

The air guide 72 may be disposed on the upper surface of the base plate 71. The air guide 72 is disposed under the motor assembly 50 and connects a housing lower hole 523 to the plate discharge outlet 719b to guide the discharge of the air that has cooled the motor while passing through the motor assembly 50. That is, the air guide 72 provides an independent air flow space that extends from the motor assembly 50 to the discharge outlet.

The air guide 72 supports the lower surface of the motor housing 52 and accommodates the cooling fan 55. When the cooling fan 55 rotates, the air passing through the motor housing 52 may flow along the air guide 72.

In addition, the air guide 72 may include an open guide hole 721 on an upper surface thereof. When the bottom plate 71 is coupled to the inner case 32, the lower surface of the motor assembly 50 may be disposed at the circumference of the guide hole 721 and the cooling fan 55 may be inserted through the guide hole 721.

A wireless power module 73 may be disposed on a lower surface of the base plate 71. The wireless power module 73 supplies wireless power to the blender 1, and includes a plurality of ferrite cores and coils to receive the power using an induced electromotive force. Accordingly, the wireless power module 73 may receive power supply by the induced electromotive force when the user wants to use the blender 1 wirelessly.

The bottom cover 74 is disposed below the base plate 71. The bottom cover 74 forms the lower surface of the main body 30 and closes the open lower surface of the outer case 31. In addition, when the wireless power module 73 is placed on the base plate 71, the wireless power module 73 may be closed by the bottom cover 74.

The bottom cover 74 may have a plate shape with a size corresponding to that of the open lower surface of the outer case 31, and the circumference of the bottom cover 74 extends upward and may be coupled to the lower side of the outer case 31. In addition, the bottom cover 74 may define a cover suction inlet 744 and a cover discharge outlet 746 to introduce the external air and discharge the air which was heat-dissipated from the inside of the main body 30.

Hereinafter, the structures of the display module 66 and the touch module 65 and mounting structures thereof are described in detail.

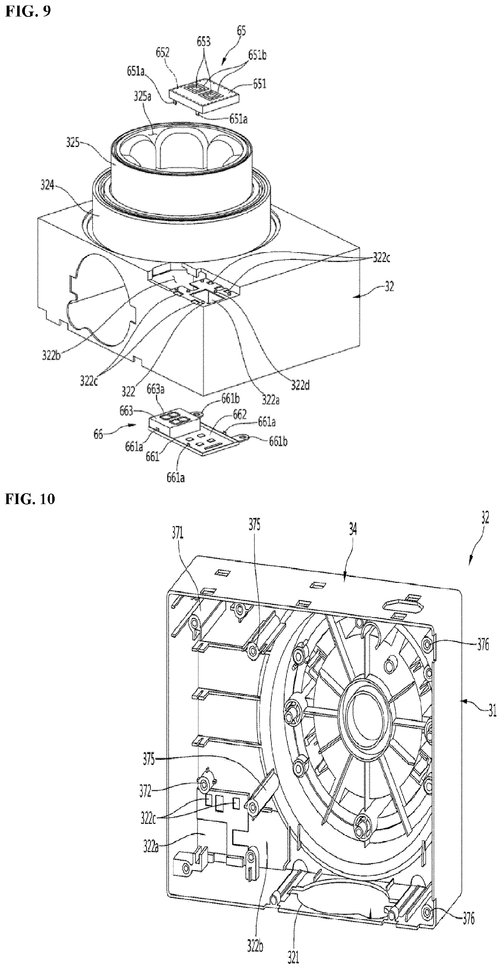

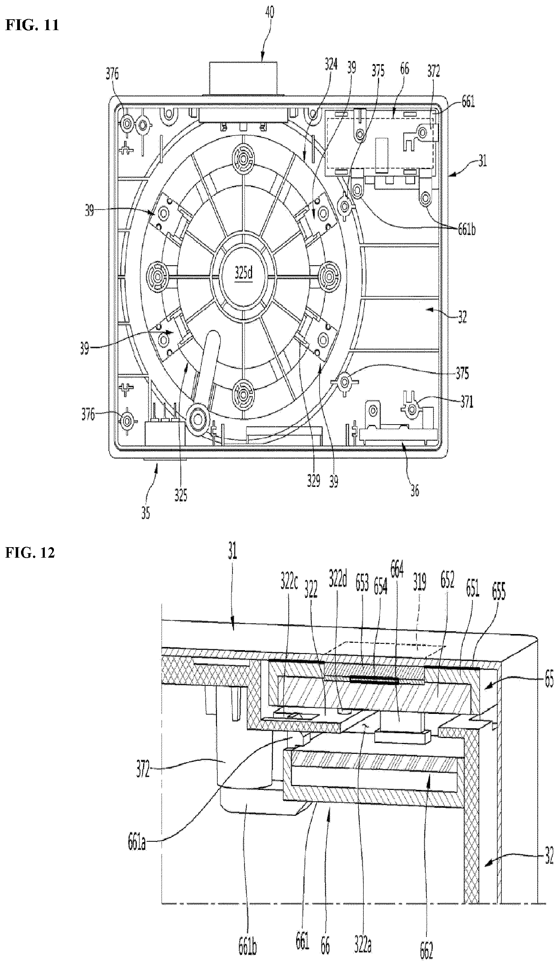

Referring to FIGS. 9 to 13, the inner case 32 has a hexahedral shape with an open lower surface. The inner case 32 is inserted through the open lower surface of the outer case 31 and is completely accommodated in the outer case 31.

In addition, the first seating portion 324 and the second seating portion 325 may be disposed on the inner case 32, protrude upward, and may define a stepped portion.

In addition, a sensing device accommodator 329 may accommodate a sensing device 39 to detect a jar 10 at a position corresponding to that of the second seating portion 325. The sensing device 39 may be provided at a position corresponding to that of the inner surface of the second seating portion 325 and a plurality of sensing devices 39 may be disposed radially with respect to a center of the second seating portion 325.

In addition, the inner case 32 has a structure for coupling to the base plate 71 to close the open lower surface of the inner case 32. The structure of coupling of the inner case 32 to the base plate 71 is described. The inner case 32 defines a plurality of bosses 371, 375, and 376 for coupling to the base plate 71. The plurality of bosses 371, 375, and 376 may extend toward the open lower surface thereof from the upper surface of the inner portion of the inner case 32.

The inner case 32 may include the mounting portion 322 on the upper surface thereof. The mounting portion 322 may be stepped from an edge of one side of the upper surface of the inner case 32. For example, the mounting portion 322 may be recessed from an edge area formed by a front side and a right side of the upper surface of the inner case 32. In addition, the mounting portion 322 may have a size such that the display module 66 and the touch module 65 may be disposed in parallel to each other and may be plate-shaped.

In addition, a height of the stepped portion of the mounting portion 322 may correspond to that of the touch module 65. When the inner case 32 and the outer case 31 are coupled in a state in which the touch module 65 is disposed on the mounting portion 322, the upper surface of the touch module 65 may contact a lower surface of the outer case 31.

The mounting portion 322 may define a display opening 322b and a touch opening 322a. The display opening 322b may be opened at a position corresponding to an arrangement position of the display module 66 and may vertically extend inside the mounting portion 322. Accordingly, a portion of the display module 66 may be directed toward the outer case 31 through the display opening 322b.

In addition, the touch opening 322a may be opened at a position corresponding to an arrangement position of the touch module 65. The touch opening 322a may extend inside the mounting portion 322 in the vertical direction and may be defined at a side spaced apart from the display opening 322b. A connector 664 may pass through the touch opening 322a to connect the touch module 65 disposed on the upper surface of the mounting portion 322 and the display module 66 disposed on the lower surface of the mounting portion 322.

A support protrusion 322d is defined at an outside of the touch opening 322a. The support protrusion 322d may protrude upward from the mounting portion 322 corresponding to the arrangement position of the touch module 65. The support protrusion 322d may support the touch module 65 from below to contact the touch module 65 with the lower surface of the outer case 31. That is, the support protrusion 322d may have a height such that the upper surface of the touch module 65 may contact the lower surface of the outer case 31. In addition, a plurality of support protrusions 322d may be provided and may support a plurality of points on the lower surface of the touch module 65 from under the touch module 65.

The mounting portion 322 may include a fastening hole 322c. A fastening hook 651a of the touch module 65 may be inserted into the fastening hole 322c. A plurality of fastening holes 322c may be provided and may be defined evenly in the mounting portion 322 to fix and receive the touch module 65 and the display module 66.

In addition, a case coupler 372 is accommodated in the inner case 32 to couple the display module 66 to the inner surface of the inner case 32. The case coupler 372 may have a shape of a boss to which a screw may be fastened and protrude downward from the inner upper surface of the inner case 32. In addition, the case coupler 372 is provided at a position corresponding to that of the case fastener 661b of the display module 66 to couple the screw passing through the case fastener 661b to the case coupler 372. Therefore, the display module 66 may be securely and fixedly coupled to the lower surface of the mounting portion 322.

The touch module 65 includes a touch PCB 652 to place the touch sensor 654 and a touch PCB case 651 to accommodate the touch PCB 652.

The touch sensor 654 is disposed on the touch PCB 652. For example, the touch sensor 654 may be a touch sensor using a piezoelectric element. When the outer case 31 made of metal is pressed, the touch sensor 654 senses a change in minute force or pressure applied to the outer case 31 to detect a touch input. A configuration of the touch sensing by the piezoelectric type touch sensor 654 is described below with reference to FIG. 16.

A plurality of touch sensors 654 may be provided and are located at positions corresponding to those of the pulse mode selector 319a and the on-off selector 319b of the touch input portion 319. When the user manipulates the pulse mode selector 319a and the on-off selector 319b by touch, the touch sensor 654 may detect the touch manipulations respectively.

The touch PCB case 651 may be opened downward and have a size to accommodate the touch PCB 652. In addition, the touch PCB case 651 may be sized to be placed on the mounting portion 322 without closing the display opening 322b when the touch PCB case 651 is disposed on the mounting portion 322.

The touch PCB case 541 includes a touch case fastening hook 651a that protrudes downward around the touch PCB case 651. The touch case fastening hook 651a is fastened to the fastening hole 322c of the mounting portion 322 when the touch module 65 is disposed. The touch PCB case 651 may be simply supported by the mounting portion 322 without an additional restraining coupling structure.

In addition, the touch PCB case 651 defines a case opening 651b on the upper surface thereof and a touch booster 653 is disposed in the case opening 651b. The case opening 651b may be provided at a position corresponding to that of the touch sensor 654. Similarly, the touch booster 653 inserted into the case opening 651b may be disposed above the touch sensor 654.

The touch booster 653 further improves the touch recognition by the touch sensor 654, may be made of plastic or rubber, and may be made of elastically deformable material or have an elastically deformable structure. For example, the touch booster 653 may be cut in a spiral shape with respect to a central portion thereof to concentrate a pressure applied on the touch booster 653 to the central portion thereof. That is, when the outer case 31 is slightly deformed, the touch booster 653 in contact with the outer case 31 may be deformed and the touch sensor 654 may be pressed by the touch booster 653.

The touch input portion 319, the touch booster 653, and the touch sensor 654 are positioned on the same extension line. When the user touch-manipulates the touch input portion 319, the slight deformation of the outer case 31 is effectively transmitted to the touch sensor 654 through the touch booster 653, thereby ensuring the detection of the touch sensor 654.

An adhesive member 655 is disposed on an upper surface of the touch PCB case 651 and may contact the upper surface of the touch PCB case 651 and a lower surface of the outer case 31. For example, the adhesive member 655 may be a double-sided tape or an adhesive.

The adhesive member 655 may be entirely disposed on the upper surface of the touch PCB case 651 excluding the case opening 651b to adhere the upper surface of the touch PCB case 651 to the lower surface of the outer case 31. Accordingly, the upper surface of the touch module 65 maintains adhesion with the lower surface of the outer case 31, and when the outer case 31 is manipulated by touch, the touch sensor 654 may effectively detect the touch manipulation by the touch booster 653.

At least a portion of the touch PCB 652 may be exposed through the touch opening 322a. A first side of the connector 664 is connected to the touch PCB 652 through the touch opening 322a and a second side of the connector 664 may be connected to the display PCB 662 of the display module 66. Accordingly, the touch PCB 652 disposed above the mounting portion 322 and the display PCB 662 disposed below the mounting portion 322 may be electrically connected to each other.

In addition, a signal processing operation and a power supply operation of the touch PCB 652 may be performed via the display PCB 662. Therefore, an additional wire to connect to the touch module 65 and a structure to place the wire are not needed to be disposed at the outside of the inner case 32 and the touch module 65 may be operated by the connection to the display module 66.

Hereinafter, the structure of the knob 40 and the mounting structure thereof are described in detail.

Referring to FIGS. 13 and 14, a knob 40 is disposed on a front surface of a main body 30 to manipulate an operation of a blender 1. The outer case 31 includes a knob hole 312 on a front surface thereof to receive the knob 40, and the knob 40 protrudes forward from the main body 30 through the knob hole 312.

The inner case 32 includes a knob mounting hole 321 on a front surface thereof. The knob mounting hole 321 is open to receive the knob 40 placed on a main PCB module 64, and is disposed at the rear of the knob hole 312. The knob mounting hole 321 may have a size larger than that of the knob hole 312 and receive the knob 40. In addition, a portion of the knob 40 may be exposed to the outside through the knob hole 312.

The knob mounting hole 321 defines guide grooves 321a at both sides of a circumference thereof and the guide groove 321 receives ring guides 434 that protrude from both sides of the knob 40. The guide groove 321a is recessed to the outside of the knob mounting hole 321 and may be defined at both sides facing each other. Therefore, the guide groove 321a may prevent interference between the knob 40 and the inner case 32 when the knob 40 is mounted. In addition, the knob 40 may have directionality by a buzzer groove 321b and the guide groove 321a when the knob 40 is disposed, and the knob 40 may be mounted at an accurate position.

The main PCB 67 includes a knob rotary shaft 671 at a center thereof to which the knob 40 is coupled. The knob rotary shaft 671 is coupled to a rotation center of the knob 40, and when the knob 40 is manipulated, the knob rotary shaft 671 may be rotated together. The main PCB 67 includes a knob sensing sensor 690 to detect rotation of the knob rotary shaft 671. Therefore, the blender 1 may select an operation mode, set an operation time period, and a rotation RPM of the motor 51.

The main PCB 67 includes a buzzer 672 as a sound output portion. The buzzer 672 may notify an operation state or an error message of the blender 1 by voice or sound.

For example, the buzzer 672 may output a specific sound when power is applied to the blender 1 to inform the user of an operation ready state. The main PCB 67 may include other sound output means such as a speaker instead of the buzzer 672 as the sound output portion.

The knob rotary shaft 671 is disposed at a central portion of the main PCB 67 and a plurality of LEDs 673a and 673b are disposed along a circumference of the knob rotary shaft 671. The plurality of LEDs 673a and 673b may be arranged to have a circle shape, and preferably, may include an outer LED 673a disposed at an outside thereof and an inner LED 673b disposed at an inside thereof.

Some of the outer LEDs 673a are turned on according to the manipulation of the knob 40. That is, when the user manipulates the knob 40 to input a specific manipulation, the outer LED 673a may be turned on based on the manipulation.

For example, when the user selects a preset specific operation mode such as an automatic cooking mode or a manual cooking mode by rotating the knob 40, the outer LED 673a corresponding to the operation mode may be turned on.

As another example, when the user inputs a specific time by rotating the knob 40, the outer LED 673a corresponding to the specific time may be turned on.

As yet another example, when the user inputs a specific RPM level by rotating the knob 40, the outer LED 673a corresponding to the selected RPM level may be turned on.

The plurality of outer LEDs 673a may not be arranged at equal distances. That is, when the manipulated subjects are different depending on a rotating degree of the knob 40, arrangement distances of the outer LEDs 673a may be set differently by areas.

The inner LED 673b is disposed along an inner portion 442 of the knob 40. The inner LED 673b is disposed closer to the knob rotary shaft 671 than the outer LED 673a and is provided at a position corresponding to that of the inner portion 442. In addition, the plurality of inner LEDs 673b may be arranged at equal distance and may all be disposed along a virtual circle circumference, that is, the inner portion 442.

The inner LEDs 673b may all be turned on at once to indicate the state of the blender 1. For example, when the power is supplied to the blender 1, the inner LED 673b is turned on to notify the user of the operation ready state of the blender 1. In this case, the inner LED 673b may transmit light of a color different from that of the outer LED 673a. In addition, the inner LED 673b may output various colors of light according to circumstances.

A plurality of PCB coupling holes 674 are defined at the circumference of the knob rotary shaft 671. A guide coupling protrusion 446 may be inserted into the PCB coupling hole 674. The number of PCB coupling holes 674 corresponds to that of the guide coupling protrusions 446 and the PCB coupler 674 may be provided at a position corresponding to that of the guide coupling protrusion 446. For example, the PCB coupling holes 674 are radially disposed about the knob rotary shaft 671 and three PCB coupling holes 674 may be disposed by equal distance.

The main PCB 67 includes PCB fastening members 675 at four edges thereof. The PCB fastening member 675 couples the main PCB 67 to a main bracket 68 and may be coupled to PCB supporters 687a, 687b, and 687c.

The knob 40 includes a knob decoration 41, a knob body 42, a knob ring 43, and a light guide 44.

The knob decoration 41 defines a portion of an outer appearance of the knob 40, and in particular, the knob decoration 41 protrudes to an outside of an outer case 31 in order for a user to directly manipulate. The knob decoration 41 may have a cylindrical shape with an open rear surface, and a diameter of the knob decoration 41 may be slightly smaller than that of the knob hole 312.

The knob body 42 may be coupled to the knob rotary shaft 671 and substantially rotate the knob rotary shaft 671 by user manipulation to input rotation manipulation. The knob body 42 may also have a cylindrical shape with an open rear surface.

The knob body 42 may include a body insertion portion 421 inserted into the body accommodating space 411, a first knob protrusion 423 that protrudes outward from a rear side of the body insertion portion 421, and a second knob protrusion 424 that protrudes from a rear side of the first knob protrusion 423.

The body insertion portion 421 may have a shape corresponding to that of the body accommodating space 411. In addition, the body insertion portion defines an adhesive groove 421A on a front surface thereof and an adhesive is disposed in the adhesive groove 421A. When the body insertion portion 421 is inserted into the body accommodating space 411, the knob body 42 may be adhered or coupled to the knob decoration 41.

The first knob protrusion 423 may protrude outward to have a larger diameter than that of the body insertion portion 421 and a support surface 422 may be disposed between the first knob protrusion 423 and the body insertion portion 421. The support surface 422 contacts a rear side of the knob decoration 41. In addition, an outer diameter of the first knob protrusion 423 corresponds to that of the knob decoration 41 such that the protrusion of the coupling portion is minimized when the knob decoration 41 and the knob body 42 are coupled to each other, thereby providing a sense of unity.

The second knob protrusion 424 protrudes outward to have a larger diameter than that of the first knob protrusion 423. An outer diameter of the second knob protrusion 424 is larger than that of a ring opening 435 defined in the knob ring 43. A diameter of the first knob protrusion 423 is smaller than that of the knob ring 43 such that the first knob protrusion 423 may be disposed in the ring opening 435. In this case, the second knob protrusion 424 is disposed behind the ring opening 435 to prevent the knob body 42 from being separated to the outside of the knob ring 43.

The knob body 42 includes a shaft coupler 425 at an inner center thereof. The shaft coupler 425 has an extending boss shape with a hollow and provides a space into which the knob rotary shaft 671 may be inserted. An inner shape of the shaft coupler 425 corresponds to a cross-sectional shape of the knob rotary shaft 671 to effectively transmit a rotational force to the knob rotary shaft 671 when the knob body 42 is rotated.

In addition, a plurality of reinforcing ribs 426 are disposed on an outer surface of the shaft coupler 425 and extend radially. The reinforcing rib 426 may connect the inner surface of the knob body 42 and the shaft coupler 425. A plurality of reinforcing ribs 426 may be provided and may be spaced apart from one another by equal distance to reinforce the knob body 42.

The knob body 42 is made of light-transmissive material or light-reflecting material. A portion of the knob body 42 positioned at the rear side of the knob decoration 41 is disposed inside the knob hole 312 and the ring opening 435, and may emit light when the inner LED 673b is turned on. At least the first knob protrusion 423 and the second knob protrusion 424 of the knob body 42 may be made of light-transmissive material or light-reflecting material. Accordingly, when the inner LED 673b is turned on, a shiny band shape may be displayed along the circumference of the knob decoration 41 when viewed from the outside.

The knob ring 43 may be provided at a position corresponding to that of the knob mounting hole 321. In addition, the knob ring 43 may define a ring opening 435 at a center thereof and the knob body 42 may be disposed in the ring opening 435.

The knob ring 43 may have a disk shape with the ring opening 435 at the center thereof, have a size smaller than that of the knob mounting hole 321, and may be disposed in the knob mounting hole 321.

In addition, the knob ring 43 may include an exposed portion 432 defined along a circumference of the ring opening 435 and a case seating portion 431 disposed along a circumference of the exposed portion 432.

The exposed portion 432 forms the circumference of the ring opening 435 and may be exposed to the outside through the knob hole 312. An inner diameter of the exposed portion 432 may be the same as or slightly larger than the inner diameter of the ring opening 435, that is, the diameter of the first knob protrusion 423. In this case, the inner diameter of the exposed portion 432 is smaller than the outer diameter of the second knob protrusion 424 to prevent the knob body 42 from being separated.

The exposed portion 432 includes an inclined surface 432a on a front surface thereof. The inclined surface 432a is inclined downward toward the knob body 42 and refracts a light transmitted from the outer LED 673a to direct the light toward the outer surface of the knob body 42.

The case seating portion 431 extends outward from an outer side of the exposed portion 432. In addition, the case seating portion 431 is stepped from the end of the exposed portion 432 to provide a surface on which the outer case 31 may be placed. Therefore, the circumferential surface of the knob hole 312 of the outer case 31 may be supported by the knob ring 43. In this case, the end of the exposed portion 432 and the case seating portion 431 may define a step having a height corresponding to a thickness of the outer case 31.

The knob ring 43 includes a ring guide 434 on an outer side thereof and the ring guide 434 extends rearward, that is, toward the light guide 44. The knob ring 43 may include the ring guides 434 at both sides thereof facing each other and the ring guide 434 is accommodated in the guide groove 321a defined in the inner case 32. Therefore, the assembled knob 40 may be disposed at an accurate position of the inner case 32.

The case seating portion 431 defines a ring fastening groove 433. A plurality of ring fastening grooves 433 may be defined at positions facing each other and may be arranged at equal distances along the knob ring 43. The ring fastening groove 433 may receive a guide hook 444 of the light guide 44, and the knob ring 43 and the light guide 44 are firmly coupled to each other by the coupling between the guide hook 444 and the ring fastening groove 433.

The knob ring 43 may be made of light-transmissive material and at least the exposed portion 432 exposed through the knob hole 312 is made of light-transmissive material. Accordingly, the light from the outer LED 673a may be transmitted through the light guide 44, and when a specific outer LED 673a among the plurality of outer LEDs 673a is turned on, the light is transmitted by the exposed portion 432 and is displayed.

The light guide 44 forms a rearmost portion of the knob 40 and substantially couples the knob 40 and the main PCB 67. In addition, the light guide 44 guides the light transmitted from the outer LED 673a and the inner LED 673b when the light guide 44 contacts the main PCB 67.

Hereinafter, the configuration of the controller 640 of the blender 1 according to the present disclosure is described.

As shown in FIG. 15, a blender 1 includes a controller 640 to control a function of each of components. The PCB module 64 includes the controller 640, and the controller 640 may have various forms such as a microcontroller, a microcomputer, or a microprocessor, as known in the art.

The controller 640 is electrically connected to a motor controller 610 to control a motor 51 of a motor assembly 50. The PCB module 61 includes the motor controller 610. The controller 640 transmits a control signal to the motor controller 610 when output control of the motor 51 is needed, and the motor controller 610 may adjust the output of the motor by controlling the power supplied to the motor 51.

In addition, the controller 640 is electrically connected to the power converter 60 such as the power PCB module. Power input from the external power source 70 is converted by the power converter 60 and is supplied to each of the controller 640 and the motor controller 610.

In addition, the controller 640 is electrically connected to each of a touch sensor 654 and a knob sensing sensor 690. The controller 640 receives, from the touch sensor 654, a touch manipulation signal for a power on-off manipulated by the user and a touch manipulation signal for a pulse mode operation and receives, from the knob sensing sensor 690, a signal to select a cooking mode and a signal to select an RPM level by the user.

In addition, the controller 640 is electrically connected to the memory 641. The controller 640 calls operation conditions for each cooking mode, in detail, an RPM level, and an operating time period of a motor stored in the memory 641 in advance, and generates a control signal to control the motor 51 based on the calling. In addition, as described below, when a target RPM level is changed according to the user selection during the pulse mode operation, the memory 641 may temporarily store the changed target RPM level.

In addition, the controller 640 is electrically connected to each of a display 318 and a sound output portion 672. The controller 640 may control the display 318 to indicate operation state information and operation time information of the blender 1 and control the sound output portion 672 such as the buzzer to output the operation state or an error message of the blender 1 by voice or sound.

In addition, the controller 640 is electrically connected to a timer 642. The controller 640 may control the timer 652 to measure an elapse of an operation time period for each operation mode of the blender 1 and control the display 318 to display the remaining time period.

Hereinafter, a configuration of operation control of the blender 1 according to the present disclosure, in particular, a configuration of pulse mode operation control is described with reference to FIGS. 16 to 18.

The present disclosure is to operate the motor for a time period desired by the user by a simple touch input to drive in a pulse mode, thereby significantly improving user convenience.

That is, the user may operate the blender 1 in the pulse mode only by touching a pulse mode selector 319a disposed on an upper surface of a main body 30 of the blender 1 without additional setting.

The pulse mode selector 319a of the blender 1 according to the present disclosure is integrated with an outer case 31 made of metal and a touch sensor 654 to sense a touch manipulation input to the pulse mode selector 319a is made of a piezoelectric element.

As shown in FIG. 16, the touch sensor 654 using the piezoelectric element may detect a change in touch force or touch pressure, and based on the change amount reaching a predetermined set value, detect an input.

Even if the user continuously presses the pulse mode selector 319a, the touch sensor 654 determines that user manipulation is not input in a section where there is no change in the pressing force or pressure. Therefore, the touch sensor 654 made of the piezoelectric element may not use a method in which the motor is continuously operated while the user continuously presses a physical push button and the motor terminates the operation thereof when a force of pressing the push button is released, that is, a long-key input method.

The present disclosure uses the piezoelectric element-type touch sensor 654 and provides a means for adjusting the pulse mode operation time period based on the number of user touch inputs to the pulse mode selector 319a.

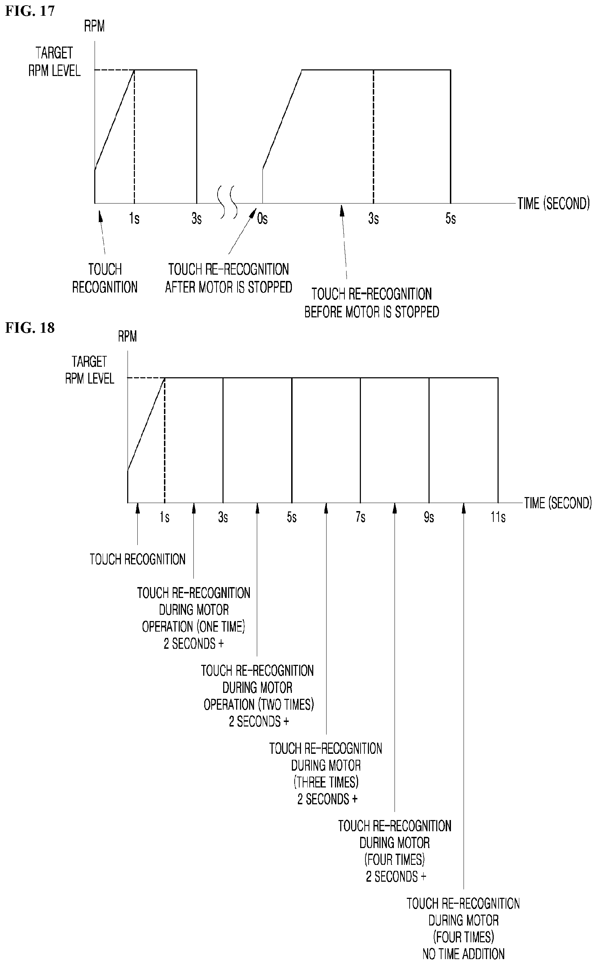

Referring to FIG. 17, when a touch sensor 654 detects a user touch input to a pulse mode selector 319a of a touch input portion 319, a controller 640 transmits, to a motor controller 610, a control signal to operate a motor 51 for an operation time period and with a target RPM that are set in advance and stored in a memory 641.

In this case, the operating time period includes a first time period (t1) for which a current rotation speed of the motor is increased to a target RPM level and a second time period (t2) for which the current rotation speed of the motor is maintained at the target RPM level after reaching the target RPM level.

Preferably, the first time period (t1) may be 1 second and the second time period (t2) may be 2 seconds.

The current rotation speed may instantaneously reach the target RPM level in about 1 second in consideration of the pulse mode driven for a very short time period.

In this case, the target RPM level is preset to be a maximum RPM level that may be output by a motor 51.

A controller 640 controls a timer 652 to measure a time period from a time point at which the motor 51 is operated, and after 3 seconds from the operation start time point thereof, transmits, to the motor controller 610, a control signal to cut off a power supplied to the motor 51, and the motor controller 610 stops the motor by cutting off the power supplied to the motor.

The blender 1 is operated in the pulse mode with one touch manipulation input based on the above processes.

Subsequently, when the user touch manipulation is input to the pulse mode selector 319a again in a state in which the motor 51 is stopped, the blender 1 is operated in the pulse mode in the same process as that described above.

However, the user may determine that the pulse mode operation time period may be needed to be extended according to a state of cooking inside the jar 10 during the pulse mode operation. If the user touch manipulation is input again before the operation time period of the pulse mode is elapsed, the controller 640 further extends the operation time period in the pulse mode by a third time period (t3). If the user touch manipulation is input again once, the controller 640 may extend the operating time period by adding a time period corresponding to the third time period (t3)^{∗}1 time, and if the user touch manipulation is input again twice, the controller 640 may further extend the operating time period by adding a time period corresponding to the third time period (t3)*2 times.

In this case, the third time period (t3) may be shorter than a sum of the first time period (t1) and the second time period (t2), preferably the same as the second time period (t2), for example, 2 seconds.

That is, the operation time period may be added by 2 seconds only by a simple additional touch input to the pulse mode selector 319a during the pulse mode operation according to the one touch input, thereby operating continuously and additionally the blender 1 in the pulse mode and further improving user convenience.

However, as the motor 51 is operated at the maximum RPM level during the pulse mode operation, if the pulse mode operation time period is infinitely increased, there is a high possibility of damage to the motor assembly 50 including the motor. In addition, it is necessary to prepare for an additional touch input to the pulse mode selector 319a against the user intention or by user carelessness during the pulse mode operation.

Therefore, the number of additional extension of the operation time period in the pulse mode may be limited to a predetermined level after the first one-time touch manipulation is input to the pulse mode selector 319a.

For example, as shown in FIG. 18, the number of additional extension of the operation time period in the pulse mode may be limited to a total of 4 times, and accordingly, a maximum time period for which the blender 1 is operated in the pulse mode may be limited to 11 seconds. That is, even if a touch manipulation is input to the pulse mode selector 319a after the operation time period is additionally extended up to 4 times, the operation time period is not further extended, and the motor is stopped after an elapse of 11 seconds.

When the motor 51 is stopped, the number of extension of the operation time period in the pulse mode is initialized. The touch manipulation input after the motor 51 is stopped is set to be recognized as a first one-time input. According to the same process, the operation time period may be further extended by 4 times.

In the above, an embodiment in which the target RPM level of the motor 51 is fixed to the maximum RPM level when operating in the pulse mode has been described, but an embodiment in which the user selects and sets the target RPM level is also possible.

That is, the number of rotations of the blade module and the motor may be adjusted according to the user intention based on the type of food cooked inside the jar 10, thereby improving the user convenience.

The target RPM is adjusted by the selection of the target RPM level based on the user manipulation input to the knob 40.

Specifically, when the touch sensor 654 detects the user touch to the pulse mode selector 319a of the touch input portion 319, the controller 640 does not immediately operate the motor 51 and waits until the user manipulation is input to the knob 40.

When the touch sensor 654 detects that the user selects a manual cooking mode from among the cooking modes by the first knob manipulation and selects the RPM level in the manual cooking mode as shown in the table below by additional knob manipulation, the controller 640 sets the selected RPM level to a target RPM level of the motor 51 for pulse mode operation.

**Table 1**

| < RPM level and the number of rotations of motor (RPM) in manual cooking mode> | | | | | | | |
|---|---|---|---|---|---|---|---|
| RPM level | 0 | 1 | 2 | 3 | 4 | 5 | 6 |
| The number of rotations of motor | 0 | 1500 | 2500 | 3500 | 5000 | 6500 | 8000 |
| RPM level | 7 | 8 | 9 | 10 | 11 | 12 | - |
| The number of rotations of motor | 9500 | 11000 | 12500 | 14000 | 15500 | 17000 | - |

Subsequently, the controller 640 transmits, to the motor controller 610, a control signal to operate the motor 51 for a preset operating time period and at a set RPM level to operate in the pulse mode.

In this case, the configuration of the operation time period and the further extension of the operation time period may be maintained as described in the above-described embodiment.

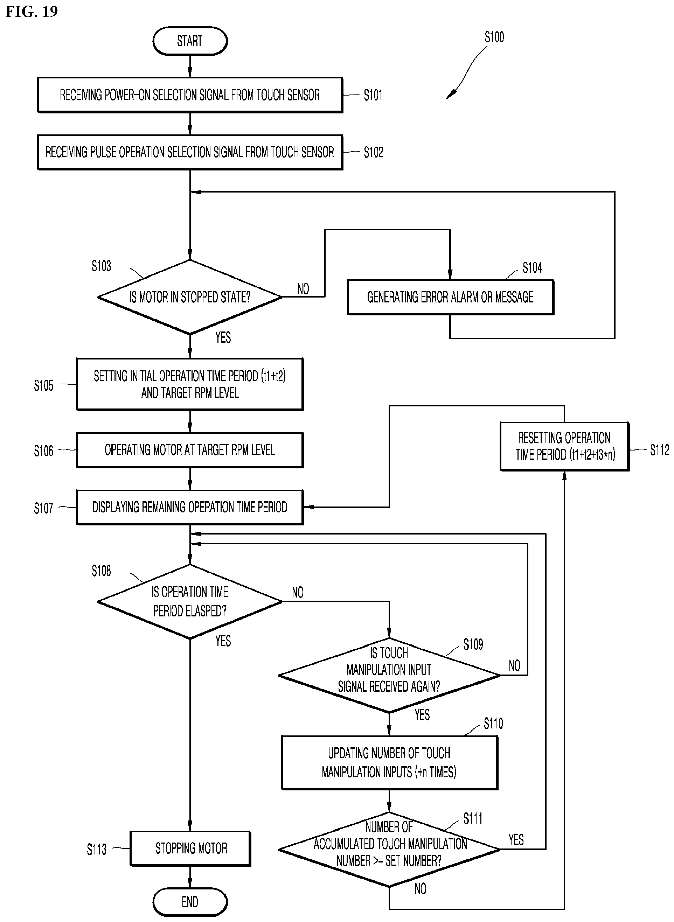

Hereinafter, a method for controlling the blender 1 according to the present disclosure is described with reference to FIGS. 19 to 23.

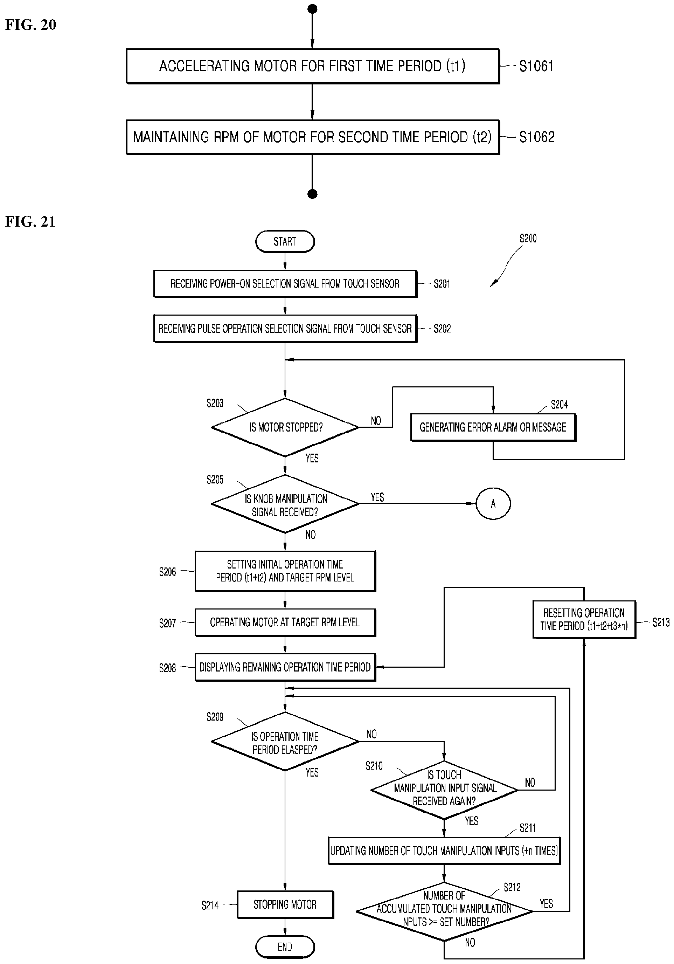

A method for controlling the blender 1 according to a first embodiment of the present disclosure (S100) is described with reference to FIGS. 19 and 20.

When a controller 640 controls detects that user touch manipulation is input to an on-off selector 319b of a touch input portion 319 using a touch sensor 654, the controller 640 waits a blender 1 in a power-on state. (S101).

Subsequently, after the controller 640 detects that the user touch manipulation is input to a pulse mode selector 319a using the touch sensor 654 when the blender 1 is in the power-on state, the controller 640 determines a state of a motor 51 as a stopped state or a non-stopped state to operate the blender 1 in a pulse mode (S102 and S103).

Based on the determination that the motor is not in the stopped state at S103, the controller 640 generates an error alarm indicating that the pulse operation may not be executed using a sound output portion 672 or generates an error message using a display 318 and waits until the motor 51 is stopped (S104).

Based on the determination that the motor is in the stopped state at S103, the controller 640 sets an initial operation time period (t1 + t2) and a target RPM level to operate the motor 51 in the pulse mode (S105).

In this case, the initial operation time period is a sum of a first time period (t1) and a second time period (t2), for example, the first time period (t1) may be 1 second, and the second time period (t2) may be 2 seconds.

In addition, the target RPM may be the maximum RPM level that the motor 51 may output, and may be, for example, 12 levels (17000 rpm), which is a highest level.

After the initial operating time period and the target RPM are set at S105, the controller 640 transmits, to the motor controller 610, a control signal to operate the motor 51 with the target RPM level to operate the motor 51 (S106).

As shown in FIG. 20, S106 may include a step (S1061) of accelerating the current rotation number of a motor 51 to a target RPM level for a first time period (t1) and a step (S1062) of maintaining the target RPM level for a second time period (t2) after the current rotation number of the motor 51 reaches the target RPM level.

Subsequently, after the motor 51 is operated at S106, the controller 640 controls a timer 642 to calculate an elapsed time period from a time point at which the motor 51 is operated and controls a display 318 to display the remaining time period (S107).

Subsequently, the controller 640 determines whether the elapsed time period after the time point at which the motor 51 is operated elapses the operation time period set at S105 (S108).

Based on the determination that the set operation time period (t1 + t2) is elapsed at S108, the controller 640 transmits, to the motor controller 610, a control signal to stop the motor and the motor controller 610 stops the motor 51 by cutting off the power supplied to the motor 51 (S113).

Based on the determination that the elapsed time period does not elapse the set operation time period (t1 + t2) at S108, the controller 640 determines additional re-input or non-additional re-input of the user touch manipulation to the pulse mode selector 319a using the touch sensor 654 (S109). That is, the controller 640 determines whether user intention to extend the operation time period of the pulse mode is input before an end of the pulse mode operation.

Based on the determination that n-time of touch manipulations is input again to the pulse mode selector 319a at S109, the controller 640 updates the number of accumulated re-input by adding the number of re-inputs of touch manipulation by n times and stores the number in a memory 641 (S110).

Subsequently, the controller 640 determines whether the updated accumulated re-input number exceeds a predetermined set number (S111). In this case, the set number may be, for example, four times, and the controller 640 determines whether the accumulated number of re-inputs exceeds the four times.

Based on the determination that the accumulated number of re-inputs is less than the set number at S 111, the controller 640 adds a time obtained by multiplying a third time period (t3) by the re-input number (n) to the remaining time period and resets the operation time period in the pulse mode (S112).

In this case, the third time period (t3) may be shorter than a sum of the first time period (t1) and the second time period (t2), preferably the same time as the second time (t2), for example, may be 2 seconds.

When the operation time period of the pulse mode is reset at S112, the process goes back to S107 and the controller 640 displays the time period acquired by adding, to the remaining time period, the time period (t3*n) obtained by multiplying the third time period (t3) by the re-input number (n) using the display 318.

Based on the determination that the accumulated re-input number is greater than or equal to the set number at S111, the process goes back to S108 and the controller 640 determines elapse or non-elapse of the operation time period again without resetting the operation time period of the pulse mode or changing the remaining time period.

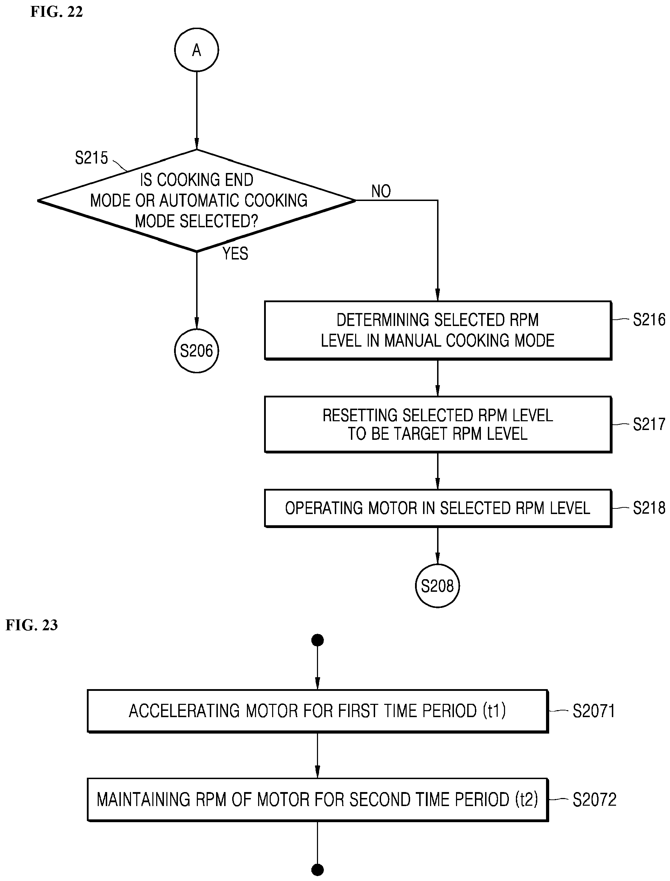

Next, a method for controlling a blender 1 according to a second embodiment of the present disclosure (S200) is described with reference to FIGS. 21 and 23.

Similar to the method for controlling the blender 1 according to the first embodiment (S100), a controller 640 waits a blender 1 in a power-on state based on determination that a touch sensor 654 detects a user touch manipulation input to an on-off selector 319 of a touch input portion 319 (S201).

Subsequently, when the controller 640 determines that user touch manipulation is input to a pulse mode selector 319a when the blender 1 is the power-on state using the touch sensor 654, the controller 640 determines a state of a motor 51 as a stopped state or a non-stopped state to operate the blender 1 in a pulse mode (S202 and S203).

Based on the determination that the motor is not in the stopped state at S203, the controller 640 controls a sound output portion 672 to generate an error alarm indicating that the pulse operation may not be executed, or controls a display 318 to generate an error message and waits until the motor 51 is stopped (S204).

Based on the determination that the motor 51 is in the stopped state at S203, the controller 640 determines input or non-input of user manipulation of rotating the knob 40 using a knob sensing sensor 690 (S205). That is, in contrast to the first embodiment, the controller 640 determines whether user intention to select a target RPM level is input before the pulse mode operation.

Based on the determination that the manipulation of rotating the knob 40 is not input at S205, the next step is performed in the same manner as that described in the first embodiment.

That is, the controller 640 sets an initial operation time period (t1 + t2) and a target RPM level to operate the motor 51 in the pulse mode and transmits, to a motor controller 610, a control signal to operate the motor 51 with the target RPM level to operate the motor 51 (S206 and S207). As shown in FIG. 23, S207 may include a step (S2071) of accelerating a current rotation number of a motor 51 to a target RPM level for a first time period (t1) and a step (S2072) of maintaining the target RPM level for a second time period (t2) after reaching the current rotation number of the motor 51 to the target RPM level.

When the motor 51 is operated at S207, the controller 640 controls the timer 642 to calculate an elapsed time period from the time point at which the motor 51 is operated, controls the display 318 to indicate the remaining time period, and determines whether the elapsed time period after the time point at which the motor 51 is operated elapses the operation time period set at S206 (S208 and S209).

In addition, based on the determination that the set operation time period is elapsed at S209, the controller 640 controls the motor 51 to be stopped (S214), and based on the determination that the set operation time period is not elapsed, the controller 640 controls the touch sensor 654 to determine additional re-input or non-additional re-input of touch manipulation to the pulse mode selector 319a (S210).

Based on the determination that n-time of touch manipulation is input again to the pulse mode selector 319a at S210, the controller 640 updates accumulated re-input number by adding the touch manipulation re-input number by n times, stores the number in the memory 641, and determines whether the updated accumulated re-input number is equal to or greater than the set number (S111 and S212).

Based on the determination that the accumulated number of re-inputs is less than the set number at S212, the controller 640 resets the operation time period of the pulse mode by adding, to the remaining time period, a time period (t3*n) acquired by multiplying the third time period (t3) by the re-input number (n) (S213). After that, the process goes back to S208 and the controller 640 controls the display 318 to display the time period obtained by adding, to the remaining time period, the time period (t3*n) obtained by multiplying the third time period (t3) by the re-input number (n). Based on the determination that the accumulated re-input number is greater than or equal to the set number at S212, the processes goes back to S209, and at S209, the controller 640 determines the elapse or the non-elapse of the operation time period again without resetting the operation time period of the pulse mode or changing the remaining time period.

Based on the determination that the manipulation of rotating the knob 40 is input at S205, the controller 640 controls a knob sensing sensor 690 to identify a selected cooking mode as shown in FIG. 22 (S215).

Based on the determination that a cooking end mode or an automatic cooking mode is selected at S215, the controller 640 determines that the user does not want to change a target RPM level. In this case, the process goes back to S206 to set the initial operation time period (t1 + t2) and the target RPM level without changing the target RPM level.

Based on the determination that a manual cooking mode is selected at S215, the controller 640 determines an RPM level selected based on the additional manipulation of rotating the knob 40 (S216).

After the selection of the RPM level is identified at S216, the controller 640 resets the selected RPM level to be the target RPM level (S217). In this case, the selected RPM level may be any one of levels 1 to 12 described in Table 1 above.

After the target RPM level is reset at S217, the controller 640 transmits, to a motor controller 610, a control signal to operate a motor 51 with the selected RPM level to operate the motor 51 (S218).

When the motor 51 is operated at S218, the controller 640 performs the S208 above.

The present disclosure has been described with reference to exemplary drawings as described above; however, the present disclosure is not limited to the embodiments and the drawings set forth herein, and various modifications can be made by those skilled in the art within the scope of the invention, which is defined in the appended claims.

### Description of Reference Numerals

| | | | |
|---|---|---|---|
| 1: | Blender | 10: | Jar |
| 20: | Lid | 30: | Main body |
| 319: | Touch input portion | 319a: | Pulse mode selector |
| 319b: | On-off selector | 40: | Knob |
| 50: | Motor assembly | 51: | Motor |
| 60: | PCB module | 65: | Touch module |
| 654: | Touch sensor | | |

## Claims

1. A blender, comprising:
a jar (10) comprising a blade module (14) configured to pulverize food or to mix fluids;
a main body (30) comprising a motor (51) configured to rotate the blade module, if the jar (10) is placed onto the main body (30); and
a controller (640, 610) disposed inside the main body (30) and configured to operate the motor (51);
wherein the main body (30) comprises an outer case (31) made of metal and defining an outer appearance of the main body (30), wherein the outer case (31) comprises a touch input portion (319) on an outer upper surface thereof,
wherein a touch sensor (654) is disposed on an inner surface of the outer case (30) at a position corresponding to the position of the touch input portion (319) and is configured to detect touch manipulation input to the touch input portion (319), and
wherein the controller (640, 610) is configured to determine an operation time period of the motor (51) based on a number of inputs of the touch manipulation detected by the touch sensor (654).

2. The blender of claim 1, wherein the controller (610, 640) is configured to determine whether the operation time period is elapsed after the motor (51) is operated, and if the operation time period is elapsed, the controller (610, 640) is configured to cut off a power supplied to the motor (51) and stop the motor (51).

3. The blender of claim 1 or 2, wherein the controller (610, 640) is configured to set the operation time period and a target RPM level of the motor (51) before the motor (51) is operated, preferably the operation time period comprises a first time period (t1) for which a current rotation number is increased to a predetermined target RPM level and a second time period (t2) for which a current rotation speed of the motor (51) is maintained at the target RPM level after reaching the target RPM level.

4. The blender of claim 3, wherein the first time period (t1) is shorter than the second time period (t2), preferably the target RPM level is a maximum RPM level that may be output by the motor (51) and/or preferably the first time period (t1) is 1 second and the second time period (t2) is 2 seconds.

5. The blender of claim 2, 3 or 4, wherein the controller (t1) is configured to determine whether the touch manipulation is re-input to the touch input portion (319) using the touch sensor (654) when the operation time period is not elapsed.

6. The blender of claim 5, wherein the controller (640, 610) is configured to: based on the determination that the touch manipulation is re-input to the touch input portion (319), update a number of accumulated re-inputs by adding the number of accumulated touch manipulation inputs to the touch input portion (319) to a re-input number after the motor (51) is operated and determine whether the number of accumulated touch manipulation inputs exceeds a predetermined set number.

7. The blender of claim 6, wherein the controller (640, 610) is configured to: based on the determination that the number of accumulated touch manipulation inputs is less than the predetermined set number, reset the operation time period by extending the operation time period by a time period obtained by multiplying a third time period by the re-input number.

8. The blender of claim 7, wherein the third time period (t3) is shorter than a sum of the first time period (t1) and the second time period (t2), preferably the third time period (t3) is the same as the second time period (t2).

9. The blender of claim 5, wherein the controller (640, 610) is configured to: based on the determination that the number of accumulated touch manipulation inputs is larger than or equal to the predetermined set number, not to reset the operation time period.

10. The blender of any one of the preceding claims, further comprising:
a knob (40) that passes through an outer surface of the outer case (30) and configured to receive rotation manipulation to switch an operation mode of the motor (51); and
a knob sensing sensor (690) configured to detect an amount of rotation of the knob (40) based on the rotation manipulation.

11. The blender of claim 10, wherein the controller (640, 610) is configured to determine whether manipulation of rotating the knob (40) is input from the knob sensing sensor (690) before operating the motor (51) based on the determination that the touch manipulation is input to the touch input portion (319).

12. The blender of claim 9, wherein the controller (640, 610) is configured to: based on the determination that the manipulation of rotating the knob (40) is input, determine a cooking mode selected based on information on the amount of rotation of knob (40) received from the knob sensing sensor (690).

13. The blender of claim 12, wherein the controller (640, 610) is configured to: based on the determination that the cooking mode selected based on the amount of rotation of the knob (40) is a cooking end mode or an automatic cooking mode, set a maximum RPM level that may be output by the motor (51) to be the target RPM level.

14. The blender of claim 13, wherein the controller (640, 610) is configured to: based on the determination that the cooking mode selected based on the amount of rotation of the knob (40) is a manual cooking mode, determine an RPM level selected based on the amount of rotation of the knob (40) received from the knob sensing sensor (690) after the manual cooking mode is selected, preferably the controller (640, 610) is configured to set the selected RPM level to be the target RPM level.

15. The blender of any one of the preceding claims, wherein the touch input portion (319) is integrated with the outer case (30).

## Patentansprüche

1. Mixer, der Folgendes umfasst:
ein Gefäß (10), das ein Klingenmodul (14) enthält, das konfiguriert ist, Lebensmittel zu pulverisieren oder Fluide zu mischen;
einen Hauptkörper (30), der einen Motor (51) enthält, der konfiguriert ist, das Klingenmodul zu drehen, falls das Gefäß (10) auf dem Hauptkörper (30) angeordnet ist; und
eine Steuereinheit (640, 610), die im Hauptkörper (30) angeordnet ist und konfiguriert ist, den Motor (51) zu betreiben;
wobei der Hauptkörper (30) ein Außengehäuse (31) aufweist, das aus Metall hergestellt ist und ein äußeres Erscheinungsbild des Hauptkörpers (30) definiert, wobei das Außengehäuse (31) an seiner äußeren oberen Oberfläche einen Berührungseingabeabschnitt (319) aufweist,
wobei ein Berührungssensor (654) an einer inneren Oberfläche des Außengehäuses (30) an einer Position angeordnet ist, die der Position des Berührungseingabeabschnitts (319) entspricht, und konfiguriert ist, eine Berührungsbedienungseingabe beim Berührungseingabeabschnitt (319) zu detektieren, und
wobei die Steuereinheit (640, 610) konfiguriert ist, eine Betriebszeitspanne des Motors (51) auf der Basis einer Anzahl von Eingaben der Berührungsbedienung, die durch den Berührungssensor (654) detektiert werden, zu ermitteln.

2. Mixer nach Anspruch 1, wobei die Steuereinheit (610, 640) konfiguriert ist, zu ermitteln, ob die Betriebszeitspanne verstrichen ist, nachdem der Motor (51) betrieben wurde, und wobei die Steuereinheit (610, 640) dann, falls die Betriebszeitspanne verstrichen ist, konfiguriert ist, eine Leistung, die dem Motor (51) zugeführt wird, zu unterbrechen, und den Motor (51) zu stoppen.

3. Mixer nach Anspruch 1 oder 2, wobei die Steuereinheit (610, 640) konfiguriert ist, die Betriebszeitspanne und einen Drehzahl-Sollwert des Motors (51) festzulegen, bevor der Motor (51) betrieben wird, wobei vorzugsweise die Betriebszeitspanne eine erste Zeitspanne (t1), in der eine aktuelle Drehzahl auf einen festgelegten Drehzahl-Sollwert erhöht wird, und eine zweite Zeitspanne (t2), in der eine aktuelle Drehzahl des Motors (51) auf dem Drehzahl-Sollwert gehalten wird, nachdem der Drehzahl-Sollwert erreicht worden ist, umfasst.

4. Mixer nach Anspruch 3, wobei die erste Zeitspanne (t1) kürzer als die zweite Zeitspanne (t2) ist, wobei vorzugsweise der Drehzahl-Sollwert ein maximaler Drehzahlwert ist, der durch den Motor (51) ausgegeben werden kann, und/oder wobei vorzugsweise die erste Zeitspanne (t1) 1 Sekunde beträgt und die zweite Zeitspanne (t2) 2 Sekunden beträgt.

5. Mixer nach Anspruch 2, 3 oder 4, wobei die Steuereinheit (t1) konfiguriert ist, unter Verwendung des Berührungssensors (654) festzustellen, ob die Berührungsbedienung beim Berührungseingabeabschnitt (319) erneut eingegeben worden ist, wenn die Betriebszeitspanne nicht verstrichen ist.

6. Mixer nach Anspruch 5, wobei die Steuereinheit (640, 610) konfiguriert ist, auf der Basis der Feststellung, dass die Berührungseingabe beim Berührungseingabeabschnitt (319) erneut eingegeben worden ist, eine Anzahl von akkumulierten Neueingaben durch Addieren der Anzahl akkumulierter Berührungsbedienungseingaben beim Berührungseingabeabschnitt (319) zu einer Neueingabe-Anzahl zu aktualisieren, nachdem der Motor (51) betrieben wurde, und festzustellen, ob die Anzahl der akkumulierten Berührungsbedienungseingaben eine festgelegte eingestellte Anzahl überschreitet.

7. Mixer nach Anspruch 6, wobei die Steuereinheit (640, 610) konfiguriert ist, auf der Basis der Feststellung, dass die Anzahl von akkumulierten Berührungsbedienungseingaben niedriger als die festgelegte eingestellte Anzahl ist, die Betriebszeitspanne durch Erweitern der Betriebszeitspanne um eine Zeitspanne, die durch Multiplizieren einer dritten Zeitspanne mit der Neueingabe-Anzahl erhalten wird, zurückzusetzen.

8. Mixer nach Anspruch 7, wobei die dritte Zeitspanne (t3) kürzer als eine Summe der ersten Zeitspanne (t1) und der zweiten Zeitspanne (t2) ist, wobei vorzugsweise die dritte Zeitspanne (t3) der zweiten Zeitspanne (t2) gleicht.

9. Mixer nach Anspruch 5, wobei die Steuereinheit (640, 610) konfiguriert ist, auf der Basis der Feststellung, dass die Anzahl der akkumulierten Berührungsbedienungseingaben größer oder gleich der festgelegten eingestellten Anzahl ist, die Betriebszeitspanne nicht zurückzusetzen.

10. Mixer nach einem der vorhergehenden Ansprüche, der ferner Folgendes umfasst:
einen Drehknopf (40), der durch eine äußere Oberfläche des Außengehäuses (30) verläuft und konfiguriert ist, eine Drehbedienung zu empfangen, um eine Betriebsart des Motors (51) umzuschalten; und
einen Drehknopf-Messsensor (690), der konfiguriert ist, einen Drehbetrag des Drehknopfs (40) auf der Basis der Drehbedienung zu detektieren.

11. Mixer nach Anspruch 10, wobei die Steuereinheit (640, 610) konfiguriert ist, auf der Basis der Feststellung, dass die Berührungsbedienung beim Berührungseingabeabschnitt (319) eingegeben worden ist, festzustellen, ob die Drehbedienung des Drehknopfs (40) vom Drehknopf-Messsensor (690) vor dem Betreiben des Motors (51) eingegeben worden ist.

12. Mixer nach Anspruch 9, wobei die Steuereinheit (640, 610) konfiguriert ist, auf der Basis der Feststellung, dass die Drehbedienung des Drehknopfs (40) eingegeben worden ist, auf der Basis von Informationen bezüglich des Drehbetrags des Drehknopfs (40), die vom Drehknopf-Messsensor (690) erhalten werden, eine ausgewählte Kochbetriebsart zu ermitteln.

13. Mixer nach Anspruch 12, wobei die Steuereinheit (640, 610) konfiguriert ist, auf der Basis der Feststellung, dass die Kochbetriebsart, die auf der Basis des Drehbetrags des Drehknopfs (40) ausgewählt worden ist, eine Kochbeendigungsbetriebsart oder eine automatische Kochbetriebsart ist, einen maximalen Drehzahlwert, der durch den Motor (51) ausgegeben werden kann, als den Drehzahl-Sollwert festzulegen.

14. Mixer nach Anspruch 13, wobei die Steuereinheit (640, 610) konfiguriert ist, auf der Basis der Feststellung, dass die Kochbetriebsart, die auf der Basis des Drehbetrags des Drehknopfs (40) ausgewählt worden ist, eine manuelle Kochbetriebsart ist, einen Drehzahlwert, der auf der Basis des Drehbetrags des Drehknopfs (40), der vom Drehknopf-Messsensor (690) erhalten wurde, nachdem die manuelle Kochbetriebsart ausgewählt worden ist, ausgewählt wurde, festzulegen, wobei vorzugsweise die Steuereinheit (640, 610) konfiguriert ist, den ausgewählten Drehzahlwert so einzustellen, dass er der Drehzahl-Sollwert ist.

15. Mixer nach einem der vorhergehenden Ansprüche, wobei der Berührungseingabeabschnitt (319) im Außengehäuse (30) integriert ist.

## Revendications

1. Mélangeur, comportant :
un récipient (10) comportant un module à lame (14) configuré pour pulvériser des aliments ou pour mélanger des fluides ;
un corps principal (30) comportant un moteur (51) configuré pour faire tourner le module à lame, si le récipient (10) est placé sur le corps principal (30) ; et
une commande (640, 610) disposée à l'intérieur du corps principal (30) et configurée pour faire fonctionner le moteur (51) ;
dans lequel le corps principal (30) comporte un boîtier extérieur (31) en métal et définissant un aspect extérieur du corps principal (30), dans lequel le boîtier extérieur (31) comporte une partie d'entrée tactile (319) sur une surface supérieure extérieure de celui-ci,
dans lequel un capteur tactile (654) est disposé sur une surface intérieure du boîtier extérieur (30) à une position correspondant à la position de la partie d'entrée tactile (319) et est configuré pour détecter une entrée de manipulation tactile dans la partie d'entrée tactile (319), et
dans lequel la commande (640, 610) est configurée pour déterminer une période de temps de fonctionnement du moteur (51) sur la base d'un nombre d'entrées de la manipulation tactile détectée par le capteur tactile (654).

2. Mélangeur selon la revendication 1, dans lequel la commande (610, 640) est configurée pour déterminer si la période de temps de fonctionnement est écoulée après que le moteur (51) a fonctionné, et si la période de temps de fonctionnement est écoulée, la commande (610, 640) est configurée pour couper une alimentation fournie au moteur (51) et arrêter le moteur (51).

3. Mélangeur selon la revendication 1 ou 2, dans lequel la commande (610, 640) est configurée pour régler la période de temps de fonctionnement et un niveau de régime cible du moteur (51) avant que le moteur (51) fonctionne, la période de temps de fonctionnement comportant de préférence une première période de temps (t1) pendant laquelle le nombre de rotations actuel est augmenté jusqu'à un niveau de régime cible prédéterminé et une deuxième période de temps (t2) pendant laquelle une vitesse de rotation actuelle du moteur (51) est maintenue au niveau de régime cible après avoir atteint le niveau de régime cible.

4. Mélangeur selon la revendication 3, dans lequel la première période de temps (t1) est plus courte que la deuxième période de temps (t2), le niveau de régime cible étant de préférence un niveau de régime maximal qui peut fourni à la sortie du moteur (51) et/ou la première période de temps (t1) étant de préférence de 1 seconde et la deuxième période de temps (t2) étant de préférence de 2 secondes.

5. Mélangeur selon la revendication 2, 3 ou 4, dans lequel la commande (t1) est configurée pour déterminer si la manipulation tactile est ré-entrée dans la partie d'entrée tactile (319) en utilisant le capteur tactile (654) lorsque la période de temps de fonctionnement n'est pas écoulée.

6. Mélangeur selon la revendication 5, dans lequel la commande (640, 610) est configurée pour : sur la base de la détermination que la manipulation tactile est ré-entrée dans la partie d'entrée tactile (319), mettre à jour un nombre de ré-entrées cumulées en additionnant le nombre d'entrées de manipulation tactile cumulées dans la partie d'entrée tactile (319) à un nombre de ré-entrées après que le moteur (51) a fonctionné et déterminer si le nombre d'entrées de manipulation tactile cumulées dépasse un nombre défini prédéterminé.

7. Mélangeur selon la revendication 6, dans lequel la commande (640, 610) est configurée pour : sur la base de la détermination que le nombre d'entrées de manipulation tactile cumulées est inférieur au nombre défini prédéterminé, réinitialiser la période de temps de fonctionnement en prolongeant la période de temps de fonctionnement d'une période de temps obtenue en multipliant une troisième période de temps par le nombre de ré-entrées.

8. Mélangeur selon la revendication 7, dans lequel la troisième période de temps (t3) est plus courte qu'une somme de la première période de temps (t1) et de la deuxième période de temps (t2), la troisième période de temps (t3) étant de préférence la même que la deuxième période de temps (t2).

9. Mélangeur selon la revendication 5, dans lequel la commande (640, 610) est configurée pour : sur la base de la détermination que le nombre d'entrées de manipulation tactile cumulées est supérieur ou égal au nombre défini prédéterminé, ne pas réinitialiser la période de temps de fonctionnement.

10. Mélangeur selon l'une quelconque des revendications précédentes, comportant en outre :
un bouton (40) qui passe à travers une surface extérieure du boîtier extérieur (30) et configuré pour recevoir une manipulation de rotation pour commuter un mode de fonctionnement du moteur (51) ; et
un capteur de détection de bouton (690) configuré pour détecter une quantité de rotation du bouton (40) sur la base de la manipulation de rotation.

11. Mélangeur selon la revendication 10, dans lequel la commande (640, 610) est configurée pour déterminer si une manipulation de rotation du bouton (40) est entrée à partir du capteur de détection de bouton (690) avant de faire fonctionner le moteur (51), sur la base de la détermination que la manipulation tactile est entrée dans la partie d'entrée tactile (319).

12. Mélangeur selon la revendication 9, dans lequel la commande (640, 610) est configurée pour : sur la base de la détermination que la manipulation de rotation du bouton (40) est entrée, déterminer un mode de cuisson sélectionné sur la base d'une information concernant la quantité de rotation du bouton (40) reçue du capteur de détection de bouton (690).

13. Mélangeur selon la revendication 12, dans lequel la commande (640, 610) est configurée pour : sur la base de la détermination que le mode de cuisson sélectionné sur la base de la quantité de rotation du bouton (40) est un mode de fin de cuisson ou un mode de cuisson automatique, définir un niveau de régime maximal qui peut être fourni à la sortie du moteur (51) comme étant le niveau de régime cible.

14. Mélangeur selon la revendication 13, dans lequel la commande (640, 610) est configurée pour : sur la base de la détermination que le mode de cuisson sélectionné sur la base de la quantité de rotation du bouton (40) est un mode de cuisson manuel, déterminer un niveau de régime sélectionné sur la base de la quantité de rotation du bouton (40) reçue du capteur de détection de bouton (690) après que le mode de cuisson manuel est sélectionné, la commande (640, 610) étant de préférence configurée pour définir le niveau de régime sélectionné comme étant le niveau de régime cible.

15. Mélangeur selon l'une quelconque des revendications précédentes, dans lequel la partie d'entrée tactile (319) est intégrée dans le boîtier extérieur (30).
